# EUROPÄISCHE PATENTSCHRIFT

(11) **EP 3 620 245 B1**
(45) Veröffentlichungstag und Bekanntmachung des Hinweises auf die Patenterteilung: **07.06.2023**
(21) Anmeldenummer: 19195818.0
(22) Anmeldetag: 06.09.2019
(51) Int. Cl.: B22F 3/105, B29C 64/371, B29C 64/153, B29C 64/364

(54) **BESTRÖMUNGSVERFAHREN FÜR EINE ADDITIVE HERSTELLVORRICHTUNG**
FLOW METHOD FOR ADDITIVE MANUFACTURING APPARATUS
PROCÉDÉ D'ALIMENTATION EN COURANT POUR UN DISPOSITIF DE FABRICATION ADDITIVE

(30) Priorität: 07.09.2018 DE 102018215302
(43) Veröffentlichungstag der Anmeldung: 11.03.2020
(73) Patentinhaber: EOS GmbH Electro Optical Systems, 82152 Krailling (DE)
(72) Erfinder: MEHL, Sebastian, 82178 Puchheim (DE)
(74) Vertreter: Prüfer & Partner mbB Patentanwälte · Rechtsanwälte

(56) Entgegenhaltungen:
- EP-A1- 2 862 651
- EP-A1- 3 147 047
- DE-A1-102006 014 835

## Beschreibung

Die vorliegende Erfindung bezieht sich auf ein Verfahren zum Beströmen einer Prozesskammer einer Vorrichtung zum additiven Herstellen eines dreidimensionalen Objekts und auf eine derartige Vorrichtung.

Vorrichtungen und Verfahren dieser Art werden beispielsweise beim Rapid Prototyping, Rapid Tooling oder Additive Manufacturing verwendet. Ein Beispiel eines solchen Verfahrens ist unter dem Namen "Selektives Lasersintern oder Laserschmelzen" bekannt. Dabei wird wiederholt eine dünne Schicht eines pulverförmigen Aufbaumaterials aufgebracht und das Aufbaumaterial in jeder Schicht durch selektives Bestrahlen von einem Querschnitt des herzustellenden Objekts entsprechenden Stellen mit einem Laserstrahl selektiv verfestigt.

Vorrichtungen und Verfahren dieser Art werden beispielsweise beim Rapid Prototyping, Rapid Tooling oder Additive Manufacturing verwendet. Ein Beispiel eines solchen Verfahrens ist unter dem Namen "Selektives Lasersintern oder Laserschmelzen" bekannt. Dabei wird wiederholt eine dünne Schicht eines pulverförmigen Aufbaumaterials aufgebracht und das Aufbaumaterial in jeder Schicht durch selektives Bestrahlen von einem Querschnitt des herzustellenden Objekts entsprechenden Stellen mit einem Laserstrahl selektiv verfestigt.

Durch den Energieeintrag beim selektiven Verfestigen können Verunreinigungen wie Spratzer, Rauche, Schmauche, Dämpfe und/oder Gase entstehen, die sich ausgehend vom Baufeld in der Prozesskammer ausbreiten. Zusätzlich können bei Verwendung eines pulverförmigen Aufbaumaterials Verunreinigungen dadurch entstehen, dass Pulver oder Pulverstaub in der Prozesskammer aufgewirbelt werden, Verunreinigungen können den Fertigungsprozess negativ beeinflussen, beispielsweise indem sie den scannenden Laserstrahl absorbieren, streuen oder ablenken, sich auf einem Einkoppelfenster für den Laserstrahl niederschlagen oder sich auf einer Aufbaumaterialschicht ablagern. Um hohen Qualitäts- und Effizienzanforderungen an den Fertigungsprozess zu genügen, müssen solche Verunreinigungen daher möglichst schnell aus der Prozesskammer abtransportiert werden.

Hierzu wird in der Regel in einem unteren Höhenbereich der Prozesskammer durch einen Gaseinlass ein Gasstrom in die Prozesskammer eingeleitet und durch einen Gasauslass aus dieser wieder abgeleitet, so dass ein im Wesentlichen von dem Gaseinlass zum Gasauslass gerichteter Gasstrom, im Folgenden auch als Hauptströmung bzw. Hauptgasstrom bezeichnet, erzeugt wird. Der Gaseinlass und der Gasauslass weisen in der Regel eine Breite, d. h. eine Abmessung quer zu einer Hauptströmungsrichtung des Hauptgasstroms auf, die kleiner ist als die Breite der Prozesskammer. Zudem verläuft der Gasstrom in der Prozesskammer in der Regel ungeführt, d. h. das Gas wird nach dem Eintritt in die Prozesskammer nicht durch eine einen engen Hohlraum umfassende Einrichtung wie z. B. ein Rohr oder einen Kanal geleitet. Die Prozesskammer selbst mit ihren Seitenwandungen sowie ihrer Boden- und Deckenfläche wird in diesem Zusammenhang nicht als strömungsführend im Sinne eines Kanals oder einer Leitung verstanden, da ihr Querschnitt einem Vielfachen des Gaszuleitungsquerschnitts bzw. Gaseinlassquerschnitts entspricht und der Gasstrom darin unkontrolliert beinahe beliebigen Änderungen seiner Strömungseigenschaften unterworfen sein kann, wobei die Prozesskammerwandung nur in sehr begrenztem Maß eine strömungsführende Funktion einnimmt. Dadurch liegen in dem unteren Höhenbereich der Prozesskammer seitlich des Gasstroms, d. h. quer zu dessen Hauptströmungsrichtung, Bereiche der Prozesskammer, die nicht gezielt durchströmt werden. Diese nicht gezielt beströmten Bereiche können die Strömungseigenschaften der Hauptströmung negativ beeinflussen. Beispielsweise kann sich die Hauptströmung in diese seitlichen Bereiche hinein ausbreiten bzw. dort hinein ausweichen, wodurch sich die Hauptströmung mit fortschreitendem Strömungsverlauf, d. h. in zunehmender Distanz zum Gaseinlass, aufweitet und sich die Strömungsgeschwindigkeit verringert. Andererseits können sich in den seitlichen Bereichen neben der Hauptströmung, welche nicht gezielt beströmt werden, weitere Strömungen, insbesondere Verwirbelungen, ausbilden, die die Strömungseigenschaften der Hauptströmung wiederum negativ beeinflussen.

Die Druckschrift DE 10 2006 014 835 A1 beschreibt eine additive Herstellvorrichtung zur Herstellung eines dreidimensionalen Objekts in einer Prozesskammer. Die Prozesskammer weist eine obere horizontale Düse auf und seitlich und unterhalb des oberen Gaseinlasses sind vertikale Düsen vorgesehen. Durch diese Düsen wir eine schnelle Schutzströmung eingeleitet, die in einem Abstand zu einem Baufeld eine Trennzone in der Prozesskammer bildet bzw. einen Schutztunnel. Diese Strömungsschicht ist für entstehenden Prozessrauch undurchlässig und leitet diesen aus der Prozesskammer aus. Weiter ist ein unterer horizontaler Gaseinlass vorgesehen um eine weitere Schutzgasströmung mit geringerer Strömungsgeschwindigkeit zum Ausbilden einer Schutzgasatmosphäre zu erzeugen.

Die Aufgabe der vorliegenden Erfindung besteht darin, ein alternatives bzw. verbessertes Verfahren zum Beströmen einer Prozesskammer bzw. eine alternative bzw. verbesserte Vorrichtung zum additiven Herstellen eines dreidimensionalen Objekts durch schichtweises Aufbringen und selektives Verfestigen eines Aufbaumaterials bereitzustellen, mit denen insbesondere die Effektivität des Abtransports von Verunreinigungen, die unter anderem bei der selektiven Verfestigung des Aufbaumaterials entstehen, aus der Prozesskammer erhöht werden kann.

Diese Aufgabe wird gelöst durch ein Verfahren zum Beströmen einer Prozesskammer gemäß Anspruch 1, ein Verfahren zum Herstellen eines dreidimensionalen Objekts gemäß Anspruch 13, und eine Herstellvorrichtung gemäß Anspruch 14. Weiterbildungen der Erfindung sind jeweils in den Unteransprüchen angegeben. Dabei können die Verfahren auch durch die untenstehenden bzw. in den Unteransprüchen ausgeführten Merkmale der Vorrichtungen weitergebildet sein oder umgekehrt, bzw. die Merkmale der Vorrichtungen und der Verfahren können auch jeweils untereinander zur Weiterbildung genutzt werden.

Das erfindungsgemäße Verfahren ist gemäß Anspruch 1.

Unter der Prozesskammer wird im Rahmen der Anmeldung ein Hohlraum innerhalb einer additiven Herstellungsvorrichtung verstanden, der nach unten hin teilweise durch das Baufeld begrenzt ist. Das Baufeld bildet einen Teil eines Bodenbereichs auf einer unteren Seite der Prozesskammer, Die Prozesskammer ist ein mit Ausnahme des Gaseinlasses und des Gasauslasses und gegebenenfalls weiterer Gaseinlässe und/oder Gasauslässe zumindest im Betrieb der Herstellvorrichtung im Wesentlichen gasdicht verschlossener Hohlraum. Unterhalb der Prozesskammer ist ein Baubehälter angeordnet, in dem das dreidimensionale Objekt aufgebaut wird. Der Baubehälter wird im Betrieb der Herstellvorrichtung nach oben hin durch das Baufeld begrenzt, sodass das Baufeld einen Grenzbereich zwischen der Prozesskammer und dem Baufeld bildet.

Unter einem unteren Höhenbereich der Prozesskammer wird im Rahmen der vorliegenden Anmeldung ein baufeldnaher Bereich der Prozesskammer verstanden, der im Wesentlichen durch eine definierte Höhe festgelegt ist, d. h. ein vertikal begrenzter Bereich der Prozesskammer ist. Der untere Höhenbereich erstreckt sich innerhalb eines Bereichs der Prozesskammer mit einer vertikalen Erstreckung von bevorzugt höchstens 30%, weiter bevorzugt höchstens 20%, besonders bevorzugt höchstens 15% der maximalen lichten Prozesskammerhöhe. Generell ist im Rahmen der vorliegenden Anmeldung unter einer maximalen lichten Höhe der Prozesskammer bzw. unter einem Abstand des Baufelds von der Prozesskammerdecke ein Abstand des Baufelds, d. h. der Arbeitsebene, von einem höchsten Punkt des Innenraums bzw. Hohlraums der Prozesskammer zu verstehen.

Vorzugsweise sind der Gaseinlass und/oder der Gasauslass ortsfest relativ zur Prozesskammer ausgebildet. Besonders bevorzugt sind/ist der Gaseinlass und/oder der Gasauslass in der Prozesskammerwandung angeordnet und derart angesteuert, dass sie eine globale Überströmung des Baufelds durch die Hauptströmung erzeugen, d. h. die Hauptströmung wird gezielt auf den gesamten Bereich der Prozesskammer gerichtet, der unmittelbar oberhalb des Baufelds liegt. Mit anderen Worten überströmt die Hauptströmung also zumindest das gesamte Baufeld, sowie gegebenenfalls weitere Bereiche um das Baufeld herum, insbesondere Bereiche, die in Hauptströmungsrichtung vor dem Baufeld (stromaufwärts) und nach dem Baufeld (stromabwärts) liegen.

Unter einem Gaseinlass wird im Rahmen der Anmeldung insbesondere eine gasdurchlässige Öffnung oder eine Mehrzahl derartiger Öffnungen innerhalb der Prozesskammer bzw. in einer Wandung der Prozesskammer verstanden, durch die ein Gasstrom bei dem Beströmungsverfahren in die Prozesskammer hinein strömt. Unter einem Gasauslass wird im Rahmen der Anmeldung insbesondere eine gasdurchlässige Öffnung oder eine Mehrzahl derartiger Öffnungen innerhalb der Prozesskammer bzw. in einer Wandung der Prozesskammer verstanden, durch die ein Gasstrom bei dem Beströmungsverfahren aus der Prozesskammer heraus strömt. Die Prozesskammer kann auch weitere Gaseinlässe und/oder Gasauslässe umfassen, beispielsweise in einem oberen Höhenbereich, der oberhalb des unteren Höhenbereichs der Prozesskammer liegt.

Wie oben beschrieben sind der Gaseinlass und der Gasauslass in dem unteren Höhenbereich der Prozesskammer vorgesehen und das Prozessgas strömt in einer Hauptströmung von dem Gaseinlass zu dem Gasauslass, d. h. das Prozessgas der Hauptströmung strömt über das Baufeld. Die Hauptströmung ist eine möglichst homogene Strömung mit einer horizontalen Ausdehnung, die ein vollständiges Überstreichen des Bereichs der Prozesskammer unmittelbar oberhalb des Baufelds erlaubt, Umgekehrt wird die Hauptströmung typischerweise so ausgebildet, dass sie den oberen, an die Prozesskammerdecke angrenzenden, Höhenbereich der Prozesskammer nicht gerichtet durchströmt. Die Hauptströmung dient dem Zweck eines Abtransports atmosphärischer Verunreinigungen aus der Prozesskammer, insbesondere um dreidimensionale Objekte mit möglichst definierten Eigenschaften, z. B. hoher Zugfestigkeit, herstellen zu können.

Die Nebenströmung ist vorzugsweise keine gerichtete und/oder gezielt in der Prozesskammer erzeugte oder in die Prozesskammer eingeleitete Strömung, sondern ein ungezielt bewegtes Gasvolumen, Die Nebenströmung kann in allen Bereichen der Prozesskammer auftreten, die nicht gerichtet bzw. gezielt mit einem Gasstrom wie z. B. der Hauptströmung beaufschlagt werden. Sie kann in hohem Maße turbulent sein und steht zumindest mit der Hauptströmung in Wechselwirkung. Die Nebenströmung kann durch die Hauptströmung angetrieben und/oder genährt werden. Ihr sind häufig keine einheitlichen Strömungseigenschaften wie z. B. Strömungsrichtung, Geschwindigkeit, Volumenstrom und/oder Massenstrom zuordenbar. Die Nebenströmung kann allerdings in ein Gleichgewichtsverhältnis mit der Hauptströmung treten, das im Rahmen einer gewissen Toleranz stabil ist. In diesem Fall kann beispielsweise eine lokale Strömungsrichtung und/oder Geschwindigkeit der Nebenströmung ermittelt werden, beispielsweise unter Verwendung einer computergestützten Simulation und/oder einer Messung. Insbesondere kann die Nebenströmung durch die Hauptströmung bewirkt werden, indem sich die Hauptströmung in nicht gezielt beströmte Randbereiche der Prozesskammer, d. h. quer zur Richtung der Hauptströmung in Bereiche, die nicht gezielt durch die Hauptströmung erfasst werden, ausbreitet bzw. in diese Bereiche ausweicht, insbesondere in Form von Verwirbelungen, Alternativ oder zusätzlich kann die Nebenströmung auch durch weitere Strömungen in der Prozesskammer verursacht bzw. beeinflusst, z. B. verstärkt, werden und/oder durch thermische Effekte.

Unter den Begriffen Haupt- und Nebenströmung werden teilweise ungeführt innerhalb der Prozesskammer fließende Strömungen von Prozessgas verstanden, die nicht in einem vollständig (d. h, in alle Richtungen quer zu einer Hauptströmungsrichtung) geschlossenen Kanal wie z. B. einem Schlauch oder Rohr geführt sind. Haupt- und Nebenströmung fließen also nicht in vollständig voneinander getrennten Räumen, sondern können zumindest bereichsweise indirekt miteinander in Wechselwirkung treten, z. B. über einen beliebigen horizontalen und/oder vertikalen Bereich innerhalb der Prozesskammer. Dementsprechend wird im Rahmen der Erfindung ein seitlich durch Leitelemente begrenzter Hauptgasstrom als teilweise ungeführter Hauptgasstrom gemäß obiger Beschreibung verstanden, wenn die Leitelemente eine bestimmte Mindestdistanz zueinander einnehmen, z. B. die Länge einer Baufeldseite bei einem rechteckigen Baufeld oder den Durchmesser des Baufelds bei einem kreisrunden Baufeld, und/oder wenn die Leitelemente den Hauptgasstrom quer zur Hauptströmungsrichtung nicht vollständig umschließen, d. h. der Hauptgasstrom z. B. nach oben hin nicht durch Leitelemente begrenzt ist. Dies trifft auch für den Fall zu, dass die Leitelemente den Hauptgasstrom zumindest abschnittsweise führen bzw. leiten bzw. abschirmen. Auf ein Rohr oder eine Leitung übertragen könnte man gemäß dieser Beschreibung von einem darin teilweise ungeführten Gasstrom sprechen, wenn das Rohr bzw. die Leitung eine Öffnung von z. B. 40% der gesamten Wandfläche (z. B. einer Zylindermantelfläche) aufweisen. Diese Öffnung kann sich beispielsweise vom Anfang bis zum Ende des Rohrs bzw. der Leitung erstrecken oder eine begrenzte Erstreckung entlang der Erstreckungsrichtung des Rohrs bzw. der Leitung aufweisen, z. B. über eine bestimmte Länge hinweg einen Anteil kleiner als 100% des Rohr- bzw. Leitungswandumfangs aufweisen. Vorzugsweise strömt die Hauptströmung, bezogen auf ihren Querschnitt unmittelbar nach dem Austreten aus dem Gaseinlass in die Prozesskammer, zu mindestens 30% einer virtuellen Hüllfläche geführt in der Prozesskammer und/oder zu höchstens 80%, bevorzugt zu höchstens 70%, weiter bevorzugt zu höchstens 60% einer virtuellen Hüllfläche geführt in der Prozesskammer, wobei die Hüllfläche aus dem Querschnittsumfang und der Laufdistanz der Hauptströmung innerhalb der Prozesskammer ermittelt wird.

Zur Verortung bzw. Abgrenzung der Hauptströmung von der Nebenströmung können insbesondere Strömungsvektoren in einer oder mehreren definierten Höhen (z. B. 1 cm) über dem Prozesskammerboden ermittelt werden, wobei als Hauptströmung das Gasvolumen definiert wird, das in dem Bereich zwischen Gaseinlass und Gasauslass von dem Gaseinlass im Wesentlichen in der Hauptströmungsrichtung zum Gasauslass in der Prozesskammer strömt. Der Begriff "im Wesentlichen in einer Hauptströmungsrichtung" berücksichtigt dabei Abweichungen von der Hauptströmungsrichtung bis zu höchstens 30°, vorzugsweise höchstens 20°, besonders bevorzugt höchstens 10°. Die Strömungsvektoren können dabei z. B. mittels einer Simulation und/oder Messung ermittelt werden.

Die Grenzzone ist ein Raumbereich bzw. ein strukturelles Element mit definierbarer Erstreckung quer zur Hauptströmungsrichtung, d. h. eine gezielt positionierte Abgrenzung zwischen Haupt- und Nebenströmung. Abhängig von der Bεeinflussungsmaß.. nahme kann eine Distanz zwischen Hauptströmung und Nebenströmung unterschiedlich gewählt werden, bei Verwendung eines Leitelements (s. u.) in Form eines Walzblechs kann die Distanz beispielsweise wenige Millimeter betragen, während bei einer strömungstechnischen Ausbildung der Grenzzone, d. h. dem Positionieren eines Leitgasstroms (s. u.), die Distanz beispielsweise einige Zentimeter betragen kann. Das Positionieren kann ein Anordnen der Grenzzone an einer Stelle der Prozesskammer und Ausrichten der Grenzzone in mehreren Raumrichtungen bedeuten und umfasst vorzugsweise auch ein Bestimmen bzw. Einstellen der Größe, d. h. Ausdehnung, der Grenzzone innerhalb des Hohlraums der Prozesskammer. Die Grenzzone wird dabei in einem Bereich außerhalb des Baufelds, insbesondere seitlich des Baufelds, platziert bzw. über einem Bodenbereich der Prozesskammer, welcher nicht das Baufeld umfasst, so dass die Grenzzone vorzugsweise nicht in einem Bereich der Hauptströmung vorgesehen ist.

Die Grenzzone ist vorzugsweise ein strukturelles Element, d. h. ein weiter unten näher beschriebenes Leitelement, das zwischen der Hauptströmung und der Nebenströmung positioniert wird. Durch eine derartige Grenzzone kann beispielsweise einerseits ein Ausweichen bzw. Ausbreiten der Hauptströmung in nicht gezielt zu beströmende Bereiche der Prozesskammer verhindert oder zumindest verringert werden und/oder die Hauptströmung zumindest abschnittsweise räumlich von der Nebenströmung getrennt werden, um eine Beeinflussung der Hauptströmung durch die Nebenströmung zu verhindern oder zumindest zu verringern. Ein Verhindern des Ausbreitens der Hauptströmung kann insbesondere im Mittel eine höhere Geschwindigkeit der Hauptströmung bewirken, wobei sich ein signifikanter Vorteil häufig nach einer bestimmten Distanz zeigt, die die Hauptströmung in der Prozesskammer zurückgelegt hat. Insgesamt kann dadurch somit eine Verbesserung der Strömungseigenschaften der Hauptströmung erzielt werden, insbesondere eine Homogenisierung der Strömungseigenschaften der Hauptströmung.

Alternativ oder zusätzlich zu einem derartigen strukturellen Element, d. h. einem Leitelement, kann eine weitere Gasströmung, d. h. ein weiter unten näher beschriebener Leitgasstrom, zusätzlich in der Prozesskammer erzeugt werden. Der Leitgasstrom dient, analog zu einem oben erwähnten Leitelement, der räumlichen Trennung zwischen Hauptströmung und Nebenströmung, indem er eine Interaktionszone zwischen Haupt- und Nebenströmung bildet. Seine Strömungseigenschaften können so eingestellt werden, dass die Grenzzone so positioniert wird, dass sie nicht oberhalb des Baufelds liegt, aber oberhalb einer Bodenfläche, die möglichst nah am Baufeld liegt. Er ist so ausgebildet , dass er die Hauptströmung flankiert und dabei mit der Nebenströmung in Wechselwirkung steht. Vorzugsweise ist der Leitgasstrom in Wechselwirkung mit der Nebenströmung so orientiert, dass er nicht oberhalb des Baufelds strömt, sondern seitlich des Baufelds. Zusätzlich kann der Leitgasstrom die Strömungseigenschaften der Haupt- und/oder Nebenströmung beeinflussen, insbesondere dahingehend, dass eine Homogenität der Strömungseigenschaften der Hauptströmung verbessert wird und/oder die Nebenströmung zumindest abschnittsweise abgeschwächt und/oder verdrängt wird. Somit kann der Leitgasstrom als Grenzzone dienen, mit der beispielsweise eine Verbesserung der Strömungseigenschaften der Hauptströmung erzielt werden kann, insbesondere eine Homogenisierung der Strömungseigenschaften der Hauptströmung.

Alternativ oder zusätzlich ist es ferner möglich, eine weitere Gasströmung derart in die Prozesskammer einzuleiten und/oder die Nebenströmung mittels eines weiteren bereitgestellten Nebengasauslasses lokal aus der Prozesskammer abzusaugen, so dass die Nebenströmung derart beeinflusst wird, dass sie zumindest abschnittsweise abgeschwächt und/oder verdrängt wird. Somit kann zumindest ein Bereich der Nebenströmung, welcher durch derartige Maßnahmen beeinflusst wird, als Interaktionszone zwischen Haupt- und Nebenströmung und somit als Grenzzone dienen.

Es sei an dieser Stelle erwähnt, dass die Prozesskammerwandung bzw. das Prozesskammergehäuse, ein Gehäuse bzw. eine Wandung eines in der Prozesskammer vorgesehenen Beschichters, ein Gehäuse einer Einrichtung zur lokalen Einleitung und/oder Ausleitung von Prozessgas, z. B. eine lokale Gaseinblasung oder Gasabsaugung, oder Gehäuse von sonstigen innerhalb der Prozesskammer positionierbaren Einrichtungen mit einem nicht-strömungsbildenden Verwendungszweck, z. B. eine Heizeinrichtung, ein Druckkopf oder eine Tragevorrichtung für derartige Einrichtungen, im Sinne vorliegender Anmeldung nicht als Leitelement zu verstehen sind.

Allgemein kann durch das erfindungsgemäße Positionieren einer Grenzzone eine Verbesserung, insbesondere eine Homogenisierung, der Hauptströmung und somit eine Verbesserung der Bauteilqualität durch einen besseren Abtransport von Verunreinigungen erzielt werden.

Erfindungsgemäß wird die Grenzzone in einem unteren Bereich der Prozesskammer positioniert und oberhalb einer Bodenfläche der Prozesskammer, die nicht das Baufeld ist. Weiter bevorzugt wird die Grenzzone zusätzlich nicht in Hauptströmungsrichtung zwischen dem Gaseinlass und dem Baufeld sowie zwischen dem Baufeld und dem Gasauslass positioniert. Besonders bevorzugt ist die Grenzzone in der Draufsicht im Wesentlichen parallel zu einer Seite bzw. parallel zu einander parallel gegenüberliegenden Seiten eines rechteckigen Baufelds neben dem Baufeld positioniert.

Vorzugsweise entspricht eine maximale horizontale Erstreckung des Gaseinlasses und/oder des Gasauslasses mindestens 80%, vorzugsweise mindestens 100%, besonders bevorzugt mindestens 120% einer Erstreckung des Baufelds, insbesondere einer Länge einer angrenzenden Baufeldseite eines rechteckigen Baufelds und/oder einer längsten Baufelddiagonale eines polygonalen Baufelds und/oder eines Baufelddurchmessers eines kreisförmigen Baufelds.

Eine derartige Dimensionierung des Gaseinlasses bzw. des Gasauslasses kann beispielsweise die Ausbildung einer Hauptströmung ermöglichen, die das Baufeld vollflächig, d. h. global, überströmt. Damit ist es insbesondere möglich, einen guten Abtransport von Verunreinigungen aus der Prozesskammer zu erzielen. Da die Hauptströmung über das Baufeld strömt, also in dem unteren Höhenbereich der Prozesskammer, können Verunreinigungen insbesondere möglichst nahe an ihrem Entstehungsort, d. h. dem Baufeld, abtransportiert werden und sich somit in verringertem Maße in die Prozesskammer hinein ausbreiten.

Bei Verwendung der Beeinflussungsmaßnahme I, d. h. dass zumindest ein Leitelement als Grenzzone in der Prozesskammer positioniert wird, wobei das zumindest eine Leitelement zumindest eine Leitfläche zur zumindest abschnittsweisen Führung der Hauptströmung und/oder der Nebenströmung aufweist, weist das zumindest eine Leitelement vorzugsweise ein erstes Ende auf, welches zumindest während des selektiven Verfestigens zumindest einer Schicht des Aufbaumaterials an dem Gaseinlass positioniert wird. Weiter bevorzugt wird das erste Ende des Leitelements spaltfrei an dem Gaseinlass positioniert.

Eine zumindest abschnittsweise Führung bzw. ein zumindest abschnittsweises Leiten einer Strömung kann, beispielsweise abhängig von der jeweils gewählten Beeinflussungsmaßnahme, auch eine Abschirmung der Strömung bedeuten. So kann durch das Leitelement sowohl die Hauptströmung, als auch die Nebenströmung abgeschirmt werden. Beispielsweise kann die Nebenströmung durch das Leitelement abgeschirmt werden, so dass sie die Hauptströmung nicht mehr bzw. nur noch in geringerem Maße beeinflussen kann. Mit anderen Worten wird in diesem Fall die Nebenströmung durch das Leitelement so geführt bzw. geleitet, dass die Hauptströmung gegen die Nebenströmung abgeschirmt ist. Damit eine gleichzeitige Führung bzw. ein Leiten sowohl der Haupt- als auch der Nebenströmung möglich ist, sind zwei Leitflächen notwendig. Da das Leitelement in der Regel ein dreidimensionaler Körper ist, ist es möglich, beispielsweise ein einziges Leitelement mit zwei derartigen Leitflächen bereitzustellen, von denen eine zur Führung bzw. zum Leiten der Hauptströmung ausgebildet ist und die andere zur Führung bzw. zum Leiten der Nebenströmung, Alternativ können zu diesem Zweck auch mehrere Leitelemente eingesetzt werden.

Eine Methode der Positionierung kann z. B. mechanisch, elektrisch bzw. (elektro-) magnetisch und/oder fluidisch sein. Eine Positionierung kann fix, d. h. fest, oder reversibel sein. Beispielsweise kann das Leitelement einen Tragarm zur Befestigung aufweisen bzw. als Tragarm ausgebildet sein, oder die Befestigung des Leitelements kann integral mit dem Gaseinlass oder einem darin angeordneten Gaseinleitelement ausgebildet sein.

Der Begriff "spaltfrei" lässt geringfügige Spalte zu, die im Rahmen der genannten Positionierungsmethoden beispielsweise infolge einer jeweils gewählten Konstruktion auftreten können, z. B. Spalte mit einer Erstreckung von wenigen Millimetern, z. B, 2 mm.

Durch das Positionieren des Leitelements an dem Gaseinlass, insbesondere spaltfrei an dem Gaseinlass, ist es beispielsweise möglich, zumindest eine abschnittsweise Führung bzw. Leitung bzw. Abschirmung des Hauptgasstroms unmittelbar nach dessen Austritt aus dem Gaseinlass in die Prozesskammer zu ermöglichen. An dieser Stelle kann eine Beeinflussung des in die Prozesskammer eingelassenen Hauptgasstroms unter Umständen besonders unerwünschte Effekte haben, beispielsweise weil sich eine initiale Veränderung der Strömungsrichtung auf seinen gesamten Verlauf in der Prozesskammer bis hin zum Gasauslass auswirken kann.

Vorzugsweise weist das erste Ende des zumindest einen Leitelements, welches wie oben beschrieben zumindest während des selektiven Verfestigens zumindest einer Schicht des Aufbaumaterials an dem Gaseinlass positioniert wird, eine vertikale Abmessung auf, die größer oder gleich einer vertikalen Erstreckung der Öffnung des Gaseinlasses ist.

Die vertikale Abmessung des ersten Endes ist vorzugsweise eine Abmessung des ersten Endes senkrecht zum Baufeld, d. h. eine Höhenerstreckung. Eine derartige Abmessung, insbesondere Höhenerstreckung, kann beispielsweise 5 cm, 10 cm oder 20 cm betragen.

Dadurch, dass die vertikale Erstreckung des ersten Endes mindestens der vertikalen Erstreckung der Öffnung des Gaseinlasses entspricht, ist es beispielsweise möglich, eine zuverlässige Führung bzw. Leitung und/oder Abschirmung über den Höhenbereich, in dem Prozessgas in die Prozesskammer einströmt, zu erzielen.

Weiter wird das Leitelement vorzugsweise derart positioniert, dass in einer Orthogonalprojektion des Gaseinlasses und des Leitelements auf die Ebene des Baufelds die Öffnung des Gaseinlasses in einer ersten Distanz zum Baufeld angeordnet ist und ein zweites Ende des Leitelements in einer zweiten Distanz zum Baufeld angeordnet ist, wobei die zweite Distanz kleiner ist als die erste Distanz, wobei die zweite Distanz weiter bevorzugt um mindestens 1 cm, noch weiter bevorzugt um mindestens 5 cm, besonders bevorzugt um mindestens 10 cm kleiner ist als die erste Distanz.

Das Leitelement kann beispielsweise eine abschnittsweise Verlängerung des Gaseinlasses sein, z. B. die Fortsetzung einer Seite oder eines Segments eines Kanals des Gaseinlasses. Damit kann beispielsweise eine selektive Führung bzw. Leitung bzw. Abschirmung des Hauptgasstroms direkt nach Austritt des Gasstroms aus dem Gaseinlass in die Prozesskammer erzielt werden, d. h. dort, wo eine Beeinflussung des in die Prozesskammer eingelassenen Gasstroms unter Umständen besonders unerwünschte Effekte haben kann.

Weiter wird das Leitelement vorzugsweise derart positioniert, dass in einer Orthogonalprojektion des Gaseinlasses auf die Ebene des Baufelds die Leitfläche des zumindest einen Leitelements im Wesentlichen senkrecht zu einer Ebene der Gaseinlassöffnung gerichtet ist.

Für den Fall, dass der Gaseinlass eine Mehrzahl von Gaseinlasskanälen umfasst, wird das Leitelement also vorzugsweise so positioniert, dass die Leitfläche im Wesentlichen parallel zu einer Erstreckungsrichtung der Einlasskanäle gerichtet ist bzw. die Leitfläche im Wesentlichen parallel zu einer Richtung, in der die Hauptströmung aus dem Gaseinlass in die Prozesskammer austritt, gerichtet ist.

Damit ist es beispielsweise möglich, die Richtungsstabilität der Hauptströmung zu verbessern, da das Leitelement die Hauptströmung seitlich von einer potenziell nachteiligen Einwirkung der Nebenströmung abschirmt, wodurch z. B. eine Richtungsstabilität verbessert oder ein Geschwindigkeitsverlust verringert werden kann.

Alternativ wird das Leitelement vorzugsweise derart positioniert, dass in einer Orthogonalprojektion des Gaseinlasses auf die Ebene des Baufelds die Leitfläche des zumindest einen Leitelements in einem Winkel größer als 0° zu einer Senkrechten auf eine Ebene der Gaseinlassöffnung gerichtet ist, wobei weiter bevorzugt die Leitfläche und die Erstreckungsrichtung der Einlasskanäle einen Winkel von mindestens 3°, noch weiter bevorzugt mindestens 5°, besonders bevorzugt mindestens 10° und/oder von höchstens 30°, noch weiter bevorzugt höchstens 20°, besonders bevorzugt höchstens 15° einschließen.

Damit ist es beispielsweise möglich, einen Leitgasstrom zu erzeugen bzw. einen durch den Gaseinlass eingeleiteten Leitgasstrom mittels des Leitelements zu führen bzw. zu leiten, wobei der Leitgasstrom in einem Winkel größer 0° zur Hauptströmungsrichtung in die Prozesskammer einströmt. Ein derartiger Leitgasstrom kann beispielsweise, wie bereits oben und auch weiter unten beschrieben, zusätzlich oder alternativ als Grenzzone dienen.

Vorzugsweise werden zumindest zwei Leitelemente in der Prozesskammer positioniert, wobei ein erstes der Leitelemente an einem ersten Ende des Gaseinlasses positioniert wird und ein zweites der Leitelemente an einem zweiten Ende des Gaseinlasses positioniert wird.

Die Enden des Gaseinlasses beziehen sich auf Längsenden des Gaseinlasses infolge einer typischerweise länglichen (im Betrieb in der additiven Herstellvorrichtung die horizontale) Erstreckung des Gaseinlasses, insbesondere wenn unter dem Gaseinlass eine Aussparung in der Prozesskammerwandung verstanden und eine Zuleitung ausgeblendet wird. Insbesondere beziehen sich die Enden des Gaseinlasses also auf eine Richtung quer zur Hauptströmungsrichtung der Hauptströmung.

Durch eine derartige Positionierung zweier Leitelemente ist es beispielsweise möglich, die Hauptströmung seitlich durch die Leitelemente zu umrahmen und damit effektiv zu führen bzw. abzuschirmen. Dies kann besonders dann eine vorteilhafte Wirkung haben, wenn seitlich des Gaseinlasses (d. h. in Verlängerung der Enden des Gaseinlasses) relativ große Abstände zur Prozesskammerwandung vorhanden sind und damit relativ große Bereiche der Prozesskammer, die gegebenenfalls nicht gerichtet beströmt werden bzw. in denen sich die Nebenströmung ausbildet, vorhanden sind, in denen sich beispielsweise schwer kontrollierbare Wirbel mit unerwünschter Wirkung auf die Hauptströmung bilden können.

Alternativ oder zusätzlich zu der oben beschriebenen Anordnung des Leitelements an dem Gaseinlass kann, unter Verwendung der Beeinflussungsmaßnahme I, d. h. dass zumindest ein Leitelement als Grenzzone in der Prozesskammer positioniert wird, wobei das zumindest eine Leitelement zumindest eine Leitfläche zur zumindest abschnittsweisen Führung der Hauptströmung und/oder der Nebenströmung aufweist, das zumindest eine Leitelement beabstandet von dem Gaseinlass in der Prozesskammer positioniert werden.

Der Begriff "beabstandet" bedeutet einen signifikant größeren Abstand, als er im Rahmen konstruktiver Notwendigkeiten erforderlich sein kann, wie oben beschrieben. Vorzugsweise beträgt ein derartiger Abstand von dem Gaseinlass mindestens 5 cm. Der Begriff "beabstandet" meint hier einen Minimalabstand. Bei einer bestimmten Erstreckung und Ausrichtung des Leitelements kann zwischen dem Minimalabstand und einem Maximalabstand des Leitelements zum Gaseinlass eine erhebliche Distanz liegen, z. B. von 30 oder 50cm.

Mit einem solchen, von dem Gaseinlass beabstandeten, Leitelement ist es beispielsweise möglich, eine Führung bzw. Abschirmung der Haupt- und/oder Nebenströmung auch in einem Abstand vom Gaseinlass, d. h. in einem weiteren Strömungsverlauf der Hauptströmung, zu ermöglichen.

Vorzugsweise wird das zumindest eine Leitelement, d. h. das oben beschriebene von dem Gaseinlass beabstandete Leitelement, dabei derart positioniert, dass in einer Orthogonalprojektion des Gaseinlasses auf die Ebene des Baufelds die Leitfläche des Leitelements im Wesentlichen senkrecht zu einer Ebene der Gaseinlassöffnung, gerichtet ist, oder in einem Winkel von höchstens 30°, vorzugsweise von höchstens 20°, weiter bevorzugt von höchstens 10°, besonders bevorzugt von höchstens 5° zu einer Senkrechten auf eine Ebene der Gaseinlassöffnung, gerichtet ist.

Dies bedeutet, dass das Leitelement vorzugsweise derart positioniert wird, dass es bzw. seine Leitfläche im Wesentlichen parallel zur Hauptströmungsrichtung der Hauptströmung gerichtet ist. Somit ist es beispielsweise möglich, eine besonders gute Führung der Hauptströmung zu erzielen.

Vorzugsweise weist das zumindest eine Leitelement, d. h. das oben beschriebene von dem Gaseinlass beabstandete Leitelement, ein erstes Ende auf und das Leitelement wird derart positioniert, dass das erste Ende in Bezug auf die Richtung der Hauptströmung im Wesentlichen neben dem Baufeld vorgesehen ist. Weiter bevorzugt weist das Leitelement weiter ein zweites Ende auf und das Leitelement wird derart positioniert, dass das zweite Ende in Bezug auf die Richtung der Hauptströmung weiter von dem Gaseinlass beabstandet ist als das erste Ende des Leitelements.

Der Begriff "neben dem Baufeld" bedeutet in einer Richtung quer zur Hauptströmung seitlich neben dem Baufeld. Die hier beschriebene bevorzugte Ausgestaltungsform bezieht sich auf eine Ansicht in der Orthogonalprojektion, d. h. nicht notwendigerweise in derselben horizontalen Ebene. Der Begriff "neben" bedeutet also in Bezug auf die Verlaufsrichtung der Hauptströmung relativ zum Baufeld nicht vor und nicht hinter dem Baufeld. Das Leitelement ist somit vorzugsweise so in der Prozesskammer vorgesehen, dass es nicht senkrecht zur Hauptströmungsrichtung bzw. zu einer Orientierung der Gaseinlasskanäle des Gaseinlasses liegt. Dies kann beispielsweise ebenfalls eine vorteilhafte Führung der Hauptströmung ermöglichen. Besonders bevorzugt werden alle Leitelemente gemäß der ersten erfindungsgemäßen Beeinflussungsmaßnahme, die von dem Gaseinlass beabstandet in der Prozesskammer positioniert werden, nach der gerade beschriebenen bevorzugten Ausgestaltungsform ausgeprägt.

Vorzugsweise wird das zumindest eine Leitelement, d. h. das oben beschriebene von dem Gaseinlass beabstandete Leitelement, im Wesentlichen zwischen einer Tür der Prozesskammer und dem Baufeld positioniert.

Da insbesondere zwischen dem Baufeld und der Tür der Prozesskammer ein großer Bereich der Prozesskammer vorgesehen sein kann, der nicht gezielt von der Hauptströmung durchströmt wird, können sich in diesem Bereich besonders gut störende Nebenströmungen ausbilden, d. h. durch die Positionierung des Leitelements in diesem Bereich kann eine besonders große Verbesserung der Strömungseigenschaften der Hauptströmung, insbesondere bezüglich ihrer Richtungsstabilität, erzielt werden.

Vorzugsweise werden zumindest zwei Leitelemente, d. h. zumindest zwei oben beschriebene von dem Gaseinlass beabstandete Leitelemente, derart in der Prozesskammer positioniert, dass in einer Orthogonalprojektion der Leitelemente auf die Ebene des Baufelds die Leitelemente die parallel zueinander angeordneten Seiten eines im Wesentlichen rechteckigen Baufelds flankieren.

Dies kann beispielsweise ein Ausbreiten der Hauptströmung für eine höhere Strömungsgeschwindigkeit und somit eine bessere Reinigungswirkung, insbesondere mit wachsender Laufdistanz der Hauptströmung innerhalb der Prozesskammer, d. h. im weiteren Strömungsverlauf der Hauptströmung, ermöglichen.

Vorzugsweise ist das zumindest eine Leitelement derart ausgebildet und/oder in der Prozesskammer positioniert, dass es bewegbar in der Prozesskammer vorgesehen ist, insbesondere verfahrbar und/oder verschwenkbar in der Prozesskammer vorgesehen ist. Dies kann sowohl auf das oben beschriebene an dem Gaseinlass positionierte Leitelement zutreffen, als auch auf das oben beschriebene von dem Gaseinlass beabstandete Leitelement.

Beispielsweise kann das Leitelement zum Einen in eine relativ zum Baufeld ortsfeste Wirkposition bringbar sein, in der die Leitfläche(n) des Leitelements so in der Prozesskammer vorgesehen ist/sind, dass sie zur zumindest abschnittsweisen Führung der Hauptströmung und/oder der Nebenströmung geeignet ist/sind, und zum Anderen in eine von der Wirkposition verschiedene Ruheposition, in der die Leitfläche(n) des Leitelements so in der Prozesskammer vorgesehen ist/sind, dass sie nicht zur Führung der Hauptströmung und/oder der Nebenströmung geeignet ist/sind, insbesondere kann das Leitelement derart ausgebildet und/oder angesteuert sein, dass es zumindest während des selektiven Verfestigens einer Aufbaumaterialschicht in der Wirkposition vorgesehen ist. Ein Wechsel zwischen der Wirkposition und der Ruheposition kann dabei durch ein Bewegen des Leitelements erfolgen, also beispielsweise durch ein Verfahren und/oder Verschwenken des Leitelements.

Dadurch ist es beispielsweise möglich, das Leitelement bzw. dessen Position an eine jeweilige Gegebenheit bzw. einen Prozesszustand in der Prozesskammer anzupassen. Beispielsweise kann ein in einem Verfahrweg des Beschichters vorgesehenes Leitelement während einer Beschichterfahrt, d. h. während des Aufbringens einer weiteren Aufbaumaterialschicht, in die Ruheposition gebracht werden, in der es die Beschichterfahrt nicht behindert.

Weitere bevorzugte, auch untereinander kombinierbare, Ausbildungen und/oder Anordnungen des zumindest einen Leitelements, welche sowohl auf das oben beschriebene an dem Gaseinlass positionierte Leitelement, als auch auf das oben beschriebene von dem Gaseinlass beabstandete Leitelement angewendet werden können, sind wie folgt:
- Die Leitfläche des Leitelements ist im Wesentlichen senkrecht zu einer Ebene des Baufelds angeordnet, wobei eine Abweichung von der Senkrechten vorzugsweise höchstens 30°, weiter bevorzugt höchstens 20°, besonders bevorzugt höchstens 10° beträgt. Dies kann beispielsweise eine besonders gute Führung der Hauptströmung ermöglichen.
- in einer Orthogonalprojektion der Leitfläche auf eine Ebene des Baufelds ist die Leitfläche in einer Längserstreckung auf einen Bereich außerhalb des Baufelds gerichtet. Dies kann beispielsweise eine globale Überströmung des Baufelds durch die Hauptströmung ermöglichen.
- Das zumindest eine Leitelement ist separat von der Wandung der Prozesskammer ausgebildet. Dadurch kann das Leitelement beispielsweise auf einfache Art und Weise bereitgestellt sein,
- Eine Erstreckung des Leitelements in eine Richtung parallel zum Baufeld entspricht mindestens 0,5%, bevorzugt mindestens 2%, besonders bevorzugt mindestens 10% und/oder höchstens 100%, bevorzugt höchstens 80%, besonders bevorzugt höchstens 60% des Abstands des Gasauslasses von dem Gaseinlass Damit ist beispielsweise ein Leitelement bereitgestellt, dass an eine Abmessung der Prozesskammer angepasst ist,
- Das Leitelement weist im Wesentlichen eine Längserstreckung parallel zum Baufeld und im Wesentlichen eine Höhenerstreckung senkrecht zum Baufeld auf, wobei eine Dicke des Leitelements senkrecht zu der Längserstreckung und der Höhenerstreckung um ein Mehrfaches (z. B. das Zehn- oder Zwanzigfache) kleiner ist als in der Längserstreckung und in der Höhenerstreckung. Damit ist ein Leitelement bereitgestellt, welches im Wesentlichen aus zwei Leitflächen gebildet ist, wobei die Erstreckung des Leitelements senkrecht zu den Leitflächen, d. h. dessen Dicke, vernachlässigbar klein ist. Dies hat beispielsweise den Vorteil, dass sich Verunreinigungen nicht oder lediglich in geringem Ausmaß auf dem Leitelement absetzen können.

Unter Durchführung der Beeinflussungsmaßnahme II, d. h. dass Strömungseigenschaften der Nebenströmung zumindest abschnittsweise gesteuert modifiziert werden, insbesondere die Richtung und/oder die Geschwindigkeit und/oder der Volumenstrom der Nebenströmung, erfolgt das zumindest abschnittsweise Modifizieren der Nebenströmung vorzugsweise durch Einleiten zumindest eines Leitgasstroms in die Prozesskammer, wobei der zumindest eine Leitgasstrom den Teilbereich des unteren Höhenbereichs, der oberhalb der das Baufeld umgebenden Bodenfläche liegt, zumindest abschnittsweise durchströmt und der Leitgasstrom so ausgebildet ist, daß er die Hauptströmung flankiert und dabei mit der Nebenströmung in Wechselwirkung steht.

Damit ist es beispielsweise möglich, alternativ oder zusätzlich zu dem oben beschriebenen Leitelement eine weitere Grenzschicht bereitzustellen, die insbesondere die Strömungseigenschaften der Hauptströmung verbessern kann. Mit dem Einleiten eines derartigen Leitgasstroms als Grenzzone in die Prozesskammer ist insbesondere eine Grenzschicht in Form einer weiteren Strömung bereitgestellt, was beispielsweise den Vorteil haben kann, dass keine weiteren strukturellen Elemente wie z. B. ein oben beschriebenes Leitelement erforderlich sind bzw. die Anzahl derartiger struktureller Elemente zumindest reduziert werden kann.

Dabei strömt der Leitgasstrom vorzugsweise durch einen an dem Gaseinlass bereitgestellten oder separat von dem Gaseinlass bereitgestellten Leiteinlasskanal in die Prozesskammer ein.

Ein Leiteinlasskanal kann beispielsweise den Vorteil haben, dass er bereits eine Richtung vorgeben kann, in der der Leitgasstrom in die Prozesskammer einströmt, wobei die Richtung insbesondere unabhängig von einer Hauptströmungsrichtung, in der die Hauptströmung in die Prozesskammer einströmt bzw. diese durchströmt, gewählt werden kann. Auch ist es durch einen derartigen Leiteinlasskanal zum Einleiten des Leitgasstroms beispielsweise möglich, weitere Strömungseigenschaften des Leitgasstroms, wie z. B. dessen Strömungsgeschwindigkeit und/oder Volumenstrom pro durchströmtem Volumenelement einzustellen, insbesondere weitgehend bzw. zu einem gewissen Maß unabhängig von der Hauptströmung. Damit können beispielsweise der Leitgasstrom und die Hauptströmung den jeweiligen Anforderungen angepasst werden, beispielsweise kann der Leitgasstrom einen höheren Volumenstrom aufweisen, um eine gute Richtungsstabilität und lange Wirkdistanz erzielen zu können, während der Volumenstrom bzw. Massenstrom und/oder die Strömungsgeschwindigkeit der Hauptströmung kleiner gewählt werden können, um z. B. ein Verblasen von in dem Baufeld aufgebrachtem Pulver zu vermeiden bzw. zumindest zu verringern.

Vorzugsweise weist der Leitgasstrom zumindest abschnittsweise, insbesondere unmittelbar nach einem Eintreten in die Prozesskammer, eine um mindestens 20% höhere maximale Geschwindigkeit und/oder einen um mindestens 20% höheren Volumenstrom pro durchströmtem'Volumenelement auf als die Hauptströmung.

Bei einer Ermittlung eines jeweiligen Volumenstroms kann das Volumenelement beispielsweise ein Würfel mit einer Kantenlänge von 5 mm oder 1 cm sein. Es kann in geeigneter Weise unmittelbar stromabwärts einer Mündung des Kanals bzw. der Kanäle und des Leiteinlasskanals in die Prozesskammer gewählt werden.

Durch eine höhere Einströmgeschwindigkeit bzw. einen größeren Volumenstrom des Leitgasstroms kann beispielsweise eine längere Wirkdistanz und/oder eine höhere Richtungsstabilität des Leitgasstroms erzielt werden. Da der Leitgasstrom nur solche Bereiche der Prozesskammer durchströmt, die außerhalb des Baufelds liegen, kann die Strömungsgeschwindigkeit und/oder der Volumenstrom des Leitgasstroms ausreichend groß gewählt werden, ohne ein Verblasen des im Baufeld aufgebrachten Pulvers zu riskieren.

Vorzugsweise wird der Leitgasstrom in einem Winkel größer als 0° von der Richtung der Hauptströmung weg eingeleitet, weiter bevorzugt in einem Winkel von mindestens 1°, noch weiter bevorzugt von mindestens 3°, noch weiter bevorzugt von mindestens 5° und/oder von höchstens 30°, noch weiter bevorzugt von höchstens 20°, noch weiter bevorzugt von höchstens 15°.

Weiter bevorzugt wird der Winkel derart gewählt, dass er eine im weiteren Strömungsverlauf der Hauptströmung erfolgende und durch die Nebenströmung verursachte Ablenkung der Hauptströmung berücksichtigt bzw. vorausschauend kompensiert, sodass die Nebenströmung im Wesentlichen in ihrem gesamten Strömungsverlauf in dem Teilbereich des unteren Höhenbereichs verläuft, der oberhalb der das Baufeld umgebenden Bodenfläche liegt.

Damit kann beispielsweise eine besonders gute Verbesserung der Homogenität der Hauptströmung erzielt werden, insbesondere wenn der Leitgasstrom in seinem weiteren Strömungsverlauf (nach einer Ablenkung durch den Nebengasstrom) im Wesentlichen parallel zur Hauptströmungsrichtung strömt.

Unter Durchführung der Beeinflussungsmaßnahme II, d. h. dass Strömungseigenschaften der Nebenströmung zumindest abschnittsweise gesteuert modifiziert werden, insbesondere die Richtung und/oder die Geschwindigkeit und/oder der Volumenstrom der Nebenströmung, kann, alternativ oder zusätzlich zu dem oben beschriebenen Einleiten zumindest eines Leitgasstroms, weiter ein Nebengasauslass in der Prozesskammer in dem Teilbereich des unteren Höhenbereichs, der oberhalb einer das Baufeld umgebenden Bodenfläche der Prozesskammer liegt, bereitgestellt werden, wobei die Nebenströmung zumindest teilweise durch den Nebengasauslass aus der Prozesskammer ausgeleitet wird.

Ein Ausleiten der Nebenströmung kann beispielsweise durch ein Absaugen der Nebenströmung erfolgen. Mit einem derartigen Nebengasauslass bzw. einem Ausleiten der Nebenströmung aus der Prozesskammer heraus sind beispielsweise weitere Möglichkeiten zum Positionieren einer erfindungsgemäßen Grenzzone gegeben.

Bei Verwendung der zusätzlichen Beeinflussungsmaßnahme III, dass die Nebenströmung zumindest abschnittsweise gesteuert verdrängt wird, indem in der Prozesskammer eine weitere Gasströmung in dem Teilbereich des unteren Höhenbereichs, der oberhalb der das Baufeld umgebenden Bodenfläche liegt, eingeleitet wird, ist die weitere Gasströmung der Nebenströmung vorzugsweise zumindest abschnittsweise entgegengerichtet und/oder trifft schräg auf die Nebenströmung auf und/oder weist eine größere Strömungsgeschwindigkeit und/oder einen größeren Volumenstrom auf als die Nebenströmung.

Damit ist beispielsweise eine weitere Möglichkeit bereitgestellt, mit der eine erfindungsgemäße Grenzzone erzeugt bzw. positioniert werden kann.

Vorzugsweise werden in dem oben beschriebenen erfindungsgemäßen Verfahren zum Beströmen einer Prozesskammer die Hauptströmung und die Nebenströmung vorab unter Verwendung eines Computerprogramms simuliert und darauf basierend eine geeignete oder zu erwartende Grenzzone ermittelt wird. Damit kann beispielsweise bereits vorab eine geeignete Grenzzone ermittelt werden.

Weiter bevorzugt ist das Computerprogramm dazu geeignet, einen Algorithmus zum Implementieren maschinellen Lernens zu implementieren und/oder die Grenzzone wird iterativ ermittelt. Damit sind beispielsweise Möglichkeiten gegeben, mit denen vorab eine geeignete Grenzzone ermittelt werden kann.

Ein erfindungsgemäßes Verfahren, d. h. ein Herstellverfahren gemäß Anspruch 13, dient zum Herstellen eines dreidimensionalen Objekts in einer Vorrichtung zum Herstellen eines dreidimensionalen Objekts durch schichtweises Aufbringen und selektives Verfestigen eines Aufbaumaterials in einem Baufeld. Bei dem Herstellverfahren wird zumindest während des selektiven Verfestigens zumindest einer Schicht des Aufbaumaterials ein oben beschriebenes Verfahren zum Beströmen einer Prozesskammer, gemäß einem der Ansprüche 1 bis 12, durchgeführt. Damit ist es beispielsweise möglich, die oben in Bezug auf das Verfahren zum Beströmen einer Prozesskammer beschriebenen Wirkungen auch in einem additiven Herstellungsverfahren zu erzielen.

Eine nicht beanspruchte Beströmungsvorrichtung dient zum Beströmen einer Prozesskammer mit einem Prozessgas in einem unteren Höhenbereich der Prozesskammer, wobei die Prozesskammer eine Prozesskammer einer Vorrichtung zum Herstellen eines dreidimensionalen Objekts durch schichtweises Aufbringen und selektives Verfestigen eines Aufbaumaterials in einem Baufeld ist. Die Beströmungsvorrichtung umfasst eine Gasfördervorrichtung zum Erzeugen zumindest eines Gasstroms in der Prozesskammer und die Prozesskammer umfasst einen Gaseinlass zum Einlassen des Prozessgases in die Prozesskammer und einen Gasauslass zum Auslassen des Prozessgases aus der Prozesskammer, wobei der Gaseinlass und der Gasauslass in dem unteren Höhenbereich der Prozesskammer vorgesehen sind und das Prozessgas im Betrieb der Beströmungsvorrichtung in einer Hauptströmung von dem Gaseinlass zu dem Gasauslass strömt. Im Betrieb der Beströmungsvorrichtung ist eine Nebenströmung in einem Teilbereich des unteren Höhenbereichs, der oberhalb einer das Baufeld umgebenden Bodenfläche der Prozesskammer liegt, lokalisiert, wobei eine Grenzzone zumindest abschnittsweise zwischen der Nebenströmung und der Hauptströmung zumindest während des selektiven Verfestigens zumindest einer Schicht des Aufbaumaterials im Wesentlichen in dem Teilbereich des unteren Höhenbereichs, der oberhalb der das Baufeld umgebenden Bodenfläche liegt, vorgesehen ist. Zu diesem Zweck umfasst die Beströmungsvorrichtung mindestens eines der folgenden Mittel:
- Mittel zu einem Positionieren zumindest eines Leitelements als Grenzzone in der Prozesskammer, wobei das zumindest eine Leitelement zumindest eine Leitfläche zur zumindest abschnittsweisen Führung der Hauptströmung und/oder der Nebenströmung aufweist;
- Mittel zu einem gesteuerten zumindest abschnittsweisen Modifizieren der Strömungseigenschaften der Nebenströmung, insbesondere in ihrer Richtung und/oder Geschwindigkeit und/oder ihrem Volumenstrom;
- Mittel zu einem gesteuerten zumindest abschnittsweisen Verdrängen der Nebenströmung.

Die erfindungsgemäße Vorrichtung gemäß Anspruch 14 ient zum Herstellen eines dreidimensionalen Objekts durch schichtweises Aufbringen und selektives Verfestigen eines Aufbaumaterials in einem Baufeld in einer Prozesskammer. Die Prozesskammer umfasst einen Gaseinlass zum Einlassen eines Prozessgases in die Prozesskammer und einen Gasauslass zum Auslassen des Prozessgases aus der Prozesskammer, wobei der Gaseinlass und der Gasauslass in einem unteren Höhenbereich der Prozesskammer vorgesehen sind.

Damit ist es beispielsweise möglich, die oben in Bezug auf das Beströmungsverfahren beschriebenen Wirkungen auch mit einer Beströmungsvorrichtung bzw. einer Herstellvorrichtung zu erzielen.

Weitere Merkmale und Zweckmäßigkeiten der Erfindung ergeben sich aus der Beschreibung von Ausführungsbeispielen anhand der beigefügten Zeichnungen.
- Fig. 1: ist eine schematische, teilweise im Schnitt dargestellte Ansicht einer Ausführungsform einer Vorrichtung zum additiven Herstellen eines dreidimensionalen Objekts gemäß der vorliegenden Erfindung,
- Fig. 2: ist eine schematische Ansicht eines Gaseinleitelements gemäß einer ersten Ausführungsform der vorliegenden Erfindung zur Verwendung in einem in Fig. 1 gezeigten Gaseinlass,
- Fig. 3a: ist eine schematische Schnittansicht eines Ausschnitts einer Prozesskammer der in Fig. 1 gezeigten Vorrichtung in Draufsicht auf das Baufeld unter Verwendung des in Fig. 2 gezeigten Gaseinleitelements und Fig. 3b zeigt ein schematisches Beispiel von Gasströmen im Betrieb einer in der Vorrichtung vorgesehenen Gasfördervorrichtung,
- Fig. 4: ist eine schematische Ansicht eines Gaseinleitelements gemäß einer zweiten Ausführungsform der vorliegenden Erfindung zur Verwendung in einem in Fig. 1 gezeigten Gaseinlass,
- Fig. 5: ist eine schematische Schnittansicht eines Ausschnitts einer Prozesskammer der in Fig. 1 gezeigten Vorrichtung in Draufsicht auf das Baufeld unter Verwendung des in Fig. 4 gezeigten Gaseinleitelements, wobei beispielhaft und schematisch im Betrieb einer in der Vorrichtung vorgesehenen Gasfördervorrichtung erzeugte Gasströme gezeigt sind,
- Fig. 6: ist eine schematische Schnittansicht eines Ausschnitts einer Prozesskammer der in Fig. 1 gezeigten Vorrichtung in Draufsicht auf das Baufeld gemäß einer dritten Ausführungsform der vorliegenden Erfindung, wobei beispielhaft und schematisch im Betrieb einer in der Vorrichtung vorgesehenen Gasfördervorrichtung erzeugte Gasströme gezeigt sind.

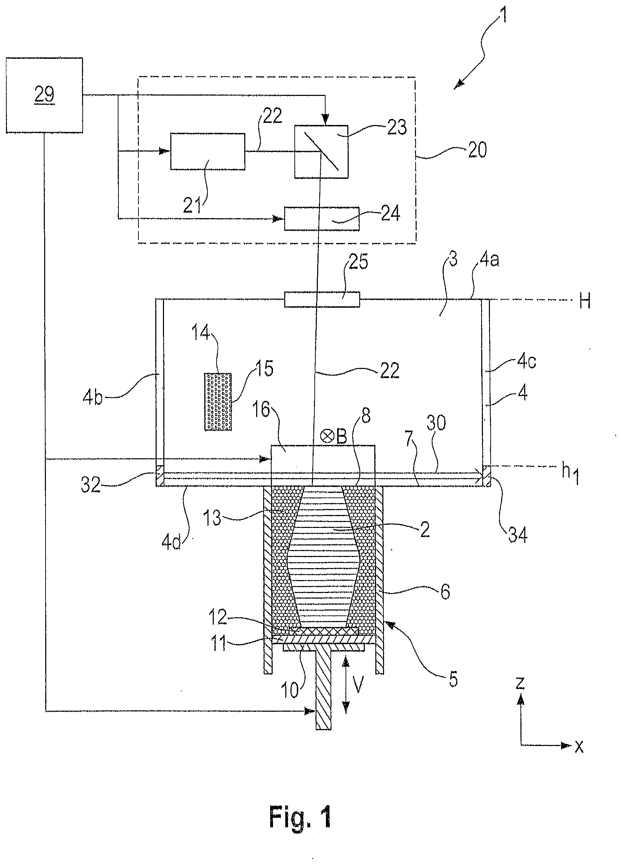

Im Folgenden wird mit Bezug auf Fig. 1 eine Ausführungsform der vorliegenden Erfindung beschrieben. Die in Fig. 1 dargestellte Vorrichtung ist eine Lasersinter- oder Laserschmelzvorrichtung 1 als Vorrichtung zum Herstellen eines dreidimensionalen Objekts, Zum Aufbauen eines Objekts 2 enthält sie eine Prozesskammer 3 mit einer Prozesskammerwand 4,

Unterhalb der Prozesskammer 3 ist ein nach oben offener Behälter 5 mit einer Behälterwandung 6 angeordnet. In dem Behälter 5, der auch als Baubehälter bezeichnet wird, ist ein in einer vertikalen Richtung V bewegbarer Träger 10 angeordnet, an dem eine Grundplatte 11 angebracht ist, die den Behälter 5 nach unten abschließt und damit dessen Boden bildet. Die Grundplatte 11 kann eine getrennt von dem Träger 10 gebildete Platte sein, die an dem Träger 10 befestigt ist, oder sie kann Integral mit dem Träger 10 gebildet sein. Je nach verwendetem Pulver und Prozess kann auf der Grundplatte 11 noch eine Bauplattform 12 als Bauunterlage angebracht sein, auf der das Objekt 2 aufgebaut wird. Das Objekt 2 kann aber auch auf der Grundplatte 11 selber aufgebaut werden, die dann als Bauunterlage dient.

Durch die obere Öffnung des Behälters 5 ist eine Arbeitsebene 7 definiert, wobei der innerhalb der Öffnung liegende Bereich der Arbeitsebene 7, der zum Aufbau des Objekts 2 verwendet werden kann, als Baufeld 8 bezeichnet wird. Die Arbeitsebene 7 ist zugleich die zu dem Innenraum der Prozesskammer 3 weisende, d. h. obere, Oberfläche eines Bodens 4d der Prozesskammer 3. Der Prozesskammerboden 4d umgibt zumindest in der Arbeitsebene 7 den Behälter 5 in dem in Fig. 1 gezeigten Ausführungsbeispiel allseitig. Der Prozesskammerboden 4d und somit die Arbeitsebene 7 sind mit einer Prozesskammerhöhe H von einer Decke 4a der Prozesskammerwandung 4 beabstandet. Die Prozesskammerhöhe H wird auch als maximale lichte Höhe der Prozesskammer 3 bezeichnet, da ein Deckenbereich der Prozesskammer ein uneinheitliches Höhenniveau, z. B. mit Dachschrägen, aufweisen kann. Die Prozesskammerhöhe H wird ermittelt, indem ein Lot auf die Arbeitsebene 7 bzw. das Baufeld 8 gefällt wird. Die Erstreckungsrichtung des Lots wird im Folgenden auch als z-Richtung bezeichnet.

In Fig. 1 ist das in dem Behälter 5 auf der Bauplattform 12 zu bildende Objekt 2 unterhalb der Arbeitsebene 7 in einem Zwischenzustand dargestellt mit mehreren selektiv verfestigten Schichten, umgeben von unverfestigt gebliebenem Aufbaumaterial 13.

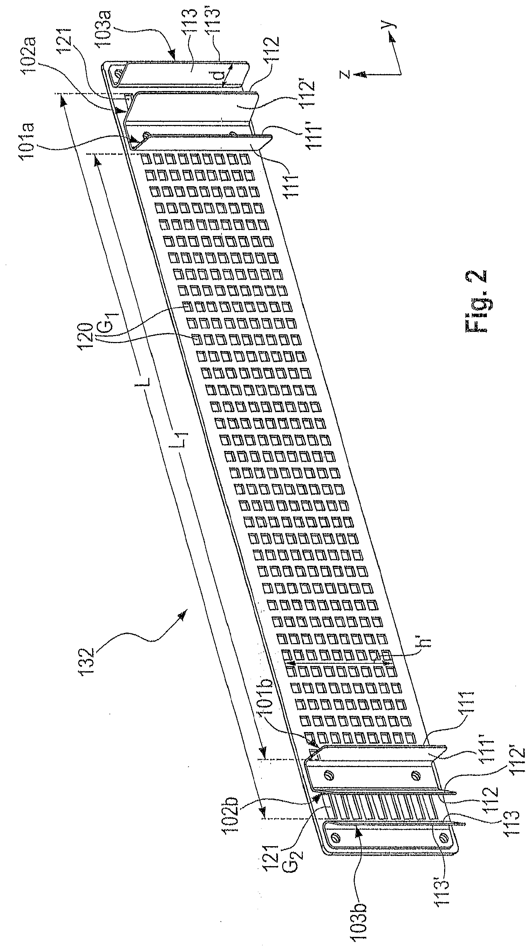

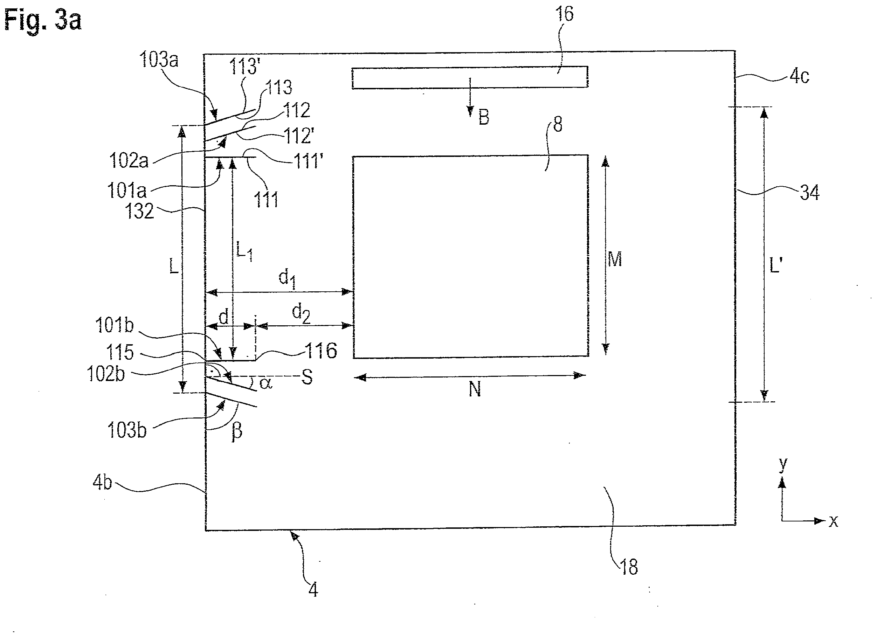

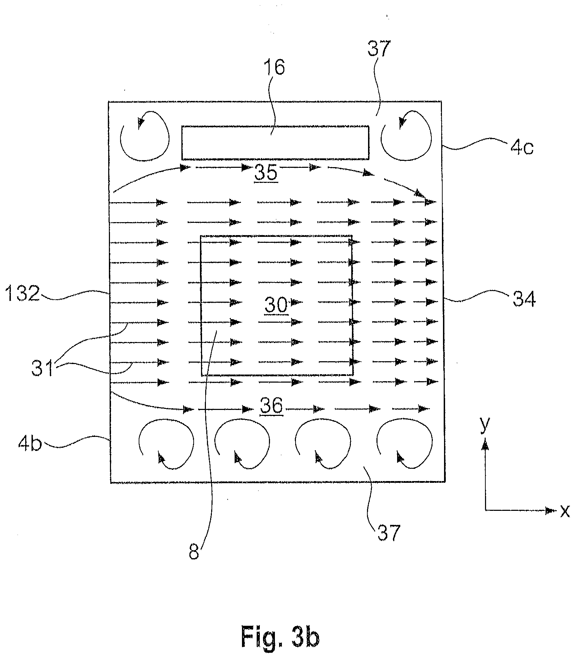

In einer ersten Seite 4b der Kammerwandung 4 ist ein Gaseinlass 32 zum Einlassen eines Prozessgases in die Prozesskammer 3 vorgesehen, welcher weiter unten in Bezug auf Fig. 2-5b näher beschrieben wird. In einer zweiten Seite 4c der Kammerwandung 4, die der ersten Seite 4b gegenüberliegt, ist ein Gasauslass 34 zum Auslassen des Prozessgases aus der Prozesskammer 3 vorgesehen, der vorzugsweise als eine Öffnung in der Kammerwandung 4 ausgebildet ist. Der Gaseinlass 32 und der Gasauslass 34 sind somit in einer x-Richtung (z. B. gezeigt in Fig. 3a und 3b) voneinander beabstandet. Bei der in Fig. 1 gezeigten Prozesskammer sind die Seiten 4b, 4c der Prozesskammerwandung 4 senkrecht zum Baufeld 8 bzw. zur Arbeitsebene 7 angeordnet.

Der Gaseinlass 32 und der Gasauslass 34 sind jeweils im Wesentlichen in einem unteren Höhenbereich der Prozesskammer 3 angeordnet, wobei sich der untere Höhenbereich von der Arbeitsebene 7 zu einer ersten Höhe h₁ der Seite 4b bzw. 4c der Kammerwandung 4 oberhalb der Arbeitsebene 7 erstreckt. Beispielsweise können sich der Gaseinlass 32 und der Gasauslass 34 über ca. 10% oder 20% der Prozesskammerhöhe H erstrecken. Damit sind in Bezug auf die Prozesskammerhöhe H der Gaseinlass 32 und der Gasauslass 34 in einem dem Baufeld 8 benachbarten Bereich angeordnet.

Der Gaseinlass 32 und der Gasauslass 34 stehen mit einer nicht gezeigten Gasfördervorrichtung in Verbindung. Sie müssen nicht, wie in Fig. 1 gezeigt, an die Arbeitsebene 7 grenzen, sondern können auch von dieser beabstandet sein. Ferner müssen sie nicht in der Kammerwandung 4 vorgesehen sein, sie können beispielsweise auch von der Kammerwandung 4 abgesetzt sein und z. B. in das Innere der Prozesskammer hineinragen oder von der Prozesskammerwandung zurückversetzt sein. Vorzugsweise schließen der Gaseinlass 32 und der Gasauslass 34 jedoch bündig mit der dem Inneren der Prozesskammer 3 zugewandten Seite der Prozesskammerwandung 4b bzw. 4c ab. Ferner können in der Prozesskammer 3 noch weitere in Fig. 1 nicht gezeigte Gaseinlässe und/oder Gasauslässe vorgesehen sein, insbesondere in einem Höhenbereich oberhalb des unteren Höhenbereichs, d. h. in einem oberen Höhenbereich, der sich zwischen der ersten Höhe h₁ und der Prozesskammerhöhe H erstreckt.

Die Lasersintervorrichtung 1 enthält weiter einen Vorratsbehälter 14 für ein durch elektromagnetische Strahlung verfestigbares pulverförmiges Aufbaumaterial 13 und einen in einer horizontalen Richtung B (auch als Beschichtungsrichtung bezeichnet) bewegbaren Beschichter 16 zum Aufbringen des Aufbaumaterials 13 innerhalb des Baufelds 8. Bei der in Fig. 1 gezeigten Vorrichtung 1 verläuft die Beschichtungsrichtung B in die Zeichenebene hinein (gekennzeichnet durch einen Kreis mit einem Kreuz), welche eine y-Richtung festlegt, sie kann jedoch auch aus der Zeichenebene heraus verlaufen. Vorzugsweise ist der Beschichter 16 in zwei gegenläufige Richtungen verfahrbar in der Vorrichtung 1 vorgesehen.

Vorzugsweise erstreckt sich der Beschichter 16 quer zu seiner Bewegungsrichtung über den ganzen zu beschichtenden Bereich. In der Regel überdeckt der Beschichter 16 also mindestens eine Seitenlänge oder einen Durchmesser des Baufelds 8. Der Vorratsbehälter 14 ist nur schematisch gezeigt, Insbesondere kann er so positioniert sein, dass er sich oberhalb des Beschichters 16 an dessen Startpunkt befindet. In einer Ausführungsform können auch zwei Vorratsbehälter jeweils an Start- und Endpunkt der Beschichterverfahrbahn vorgesehen sein. Alternativ kann auch eine Anzahl von Vorratsbehältern vorgesehen sein, die unterhalb der Arbeitsebene 7 liegen und Portionen des Aufbaumaterials 13 mittels eines Dosierstempels zum Beschichter 16 befördern

Optional ist in der Prozesskammer 3 bzw. in der Prozesskammerdecke 4a eine in Fig. 1 nicht gezeigte Strahlungsheizung angeordnet, die zum Beheizen des aufgebrachten Aufbaumaterials 13 dient. Als Strahlungsheizung kann beispielsweise ein Infrarotstrahler vorgesehen sein.

Vorzugsweise ist durch die Richtung, in der der Gaseinlass 32 und der Gasauslass 34 voneinander beabstandet sind (x-Richtung), die Bewegungsrichtung des Beschichters 16 (y-Richtung) und die Prozesskammerhöhe H (z-Richtung) ein kartesisches Koordinatensystem definiert.

Die Lasersintervorrichtung 1 enthält ferner eine Belichtungsvorrichtung 20 als Bestrahlungsvorrichtung mit einem Laser 21, der einen Laserstrahl 22 erzeugt, der über eine Umlenkvorrichtung 23 umgelenkt und durch eine Fokussiervorrichtung 24 über ein Einkoppelfenster 25, das an der Oberseite der Prozesskammer 3 in der Kammerwandung 4, d. h. in der Decke 4a der Kammerwandung 4, angebracht ist, auf die Arbeitsebene 7 fokussiert wird. In Fig. 1 ist eine Prozesskammer 3 mit einem Einkoppelfenster 25 gezeigt, es können jedoch auch mehrere Einkoppelfenster in der Kammerwandung 4 bzw. in der Prozesskammerdecke 4a vorgesehen sein.

Weiter enthält die Lasersintervorrichtung 1 eine Steuereinheit 29, über die die einzelnen Bestandteile der Vorrichtung 1 in koordinierter Weise zum Durchführen des Bauprozesses gesteuert werden. Alternativ kann die Steuereinheit auch teilweise oder ganz außerhalb der Vorrichtung angebracht sein. Die Steuereinheit kann eine CPU enthalten, deren Betrieb durch ein Computerprogramm (Software) gesteuert wird. Das Computerprogramm kann getrennt von der Vorrichtung auf einem Speichermedium gespeichert sein, von dem aus es in die Vorrichtung, insbesondere in die Steuereinheit geladen werden kann.

Im Betrieb der Lasersinter- oder Laserschmelzvorrichtung 1 wird zum Aufbringen einer Schicht des pulverförmigen Aufbaumaterials 13 zunächst der Träger 10 um eine Höhe abgesenkt, die der gewünschten Schichtdicke entspricht. Der Beschichter 16 nimmt aus dem Vorratsbehälter 14 eine zum Aufbringen einer Schicht ausreichende Menge des Aufbaumaterials 13 auf und fährt dann über das Baufeld 8, bringt dort das Aufbaumaterial 13 auf die Bauunterlage oder eine bereits vorher vorhandene Pulverschicht auf und zieht es zu einer Schicht aus. Optional wird das pulverförmige Aufbaumaterial 13 mittels einer Strahlungsheizung (in den Figuren nicht gezeigt) auf eine Arbeitstemperatur aufgeheizt.

Anschließend wird der Querschnitt des herzustellenden Objekts 2 von dem Laserstrahl 22 abgetastet, sodass das pulverförmige Aufbaumaterial 13 an den Stellen verfestigt wird, die dem Querschnitt des herzustellenden Objekts 2 entsprechen. Diese Schritte werden solange wiederholt, bis das Objekt 2 fertiggestellt ist und der Prozesskammer 3 entnommen werden kann.

Erfindungsgemäß wird während der Herstellung des dreidimensionalen Objekts 2, zumindest jedoch während des selektiven Verfestigens der Aufbaumaterialschichten, der Prozesskammer 3 durch die nicht gezeigte Gasfördervorrichtung ein Gas (Prozessgas) zugeführt, um z. B. beim selektiven Verfestigen von metallenem oder metallbasiertem (Metallanteil größer 50 Volumenprozent) Aufbaumaterial entstehende atmosphärische Verunreinigungen aus der Prozesskammer 3 zu entfernen. Dabei strömt das Gas zunächst durch den Gaseinlass 32 in die Prozesskammer 3. Anschließend strömt es im Wesentlichen als Freistrahl innerhalb des Hohlraums der Prozesskammer 3. Eine Hauptströmung 30 des durch den Gaseinlass 32 eingeströmten Prozessgases verläuft im Wesentlichen in y-Richtung von dem Gaseinlass 32 zu dem Gasauslass 34. Durch den Gasauslass 34 wird das Prozessgas unter Mitführung etwaiger Verunreinigungen aus der Prozesskammer 3 ausgeleitet.

Als Gas bzw. Prozessgas wird vorzugsweise ein Schutzgas verwendet, das mit dem Aufbaumaterial im Wesentlichen keine chemische Reaktion eingeht (Inertgas), je nach verwendetem Aufbaumaterial beispielsweise Stickstoff oder Argon.

Als Aufbaumaterial können verschiedene Arten von Pulver verwendet werden, insbesondere Metallpulver, Kunststoffpulver, Keramikpulver, Sand, gefüllte oder gemischte Pulver. Anstelle von Pulver können auch andere geeignete Materialien als Aufbaumaterial verwendet werden. Vorzugsweise ist das Aufbaumaterial ein Metallpulver, Bei der Verwendung eines Metallpulvers als Aufbaumaterial ist das Auftreten von Verunreinigungen wie z. B. Spratzer, Rauche, Schmauche, Dämpfe und/oder Gase besonders groß, so dass durch die Erfindung besonders gute Verbesserungen des Herstellungsprozesses bzw. der Qualität und/oder Maßhaltigkeit des herzustellenden Objekts erzielbar sind.

Fig. 2 zeigt ein Lochblech 132 zur Verwendung in dem in Fig. 1 gezeigten Gaseinlass 32, welches auch als Gaseinlassfeld bezeichnet wird. Das Lochblech 132 weist eine Mehrzahl von voneinander beabstandeten Hauptgaseinlassöffnungen 120 und eine Mehrzahl von voneinander beabstandeten Leitgaseinlassöffnungen 121 zum Einleiten eines Gases in die Prozesskammer 3 hinein auf, wobei die Hauptgaseinlassöffnungen und die Leitgaseinlassöffnungen, wie unten beschrieben, in verschiedenen Bereichen des Lochblechs vorgesehen sind. Das Lochblech 132 als Gaseinleitelement ist dabei so an der Prozesskammerwandung 4b anbringbar bzw. im Betrieb angebracht bzw., dass die Hauptgaseinlassöffnungen 120 und die Leitgaseinlassöffnungen 121 im Wesentlichen die einzigen gasdurchlässigen Öffnungen des Gaseinlasses 32 gemäß Fig. 1 zum Einleiten des Gases in die Prozesskammer 3 bilden. Allerdings kann die Prozesskammer 3 über den Gaseinlass 32 hinaus noch weitere Gaseinlässe, z. B. in einem oberen Höhenbereich der Prozesskammer 3, umfassen.

Die Hauptgaseinlassöffnungen 120 sind vorzugsweise rasterförmig in dem Lochblech 132 angeordnet, d. h. sie sind regelmäßig beabstandet neben- und untereinander in Zeilen und Spalten angeordnet. Die Zellen und/oder Spalten können auch zueinander versetzt sein (in Fig. 2 nicht gezeigt). Eine Zeile von Hauptgaseinlassöffnungen 120 erstreckt sich im Wesentlichen über eine Länge L₁ in y-Richtung und eine Spalte von Hauptgaseinlassöffnungen 120 erstreckt sich im Wesentlichen über eine Höhe h' in z-Richtung, wenn das Lochblech 132 in der Seitenwand 4b der Prozesskammer 3 angebracht ist. Dabei entspricht im Betrieb die Höhe h' vorzugsweise annähernd der ersten Höhe h₁, bis zu der sich der untere Höhenbereich der Prozesskammer 3 erstreckt. Wie in Fig. 2 gezeigt, können die Hauptgaseinlassöffnungen 120 z. B. im Wesentlichen als quadratische Löcher in dem Lochblech 132 ausgebildet sein. Die Hauptgaseinlassöffnungen 120 weisen vorzugsweise jeweils einen Kanalquerschnitt mit definiertem Flächeninhalt G₁ auf.

Seitlich der Hauptgaseinlassöffnungen 120 in Bezug auf die y-Richtung ist jeweils eine Spalte von regelmäßig beabstandet untereinander angeordneten Leitgaseinlassöffnungen 121 in dem Lochblech 132 vorgesehen. Es kann auch jeweils mehr als eine Spalte von Leitgaseinlassöffnungen 121 vorgesehen sein. Eine Spalte von Leitgaseinlassöffnungen 121 erstreckt sich im Wesentlichen über eine Höhe h' in z-Richtung, wenn das Lochblech 132 in der Seitenwand 4b der Prozesskammer 3 angebracht ist. Dabei entspricht im Betrieb die Höhe h' vorzugsweise annähernd der ersten Höhe h₁, bis zu der sich der untere Höhenbereich der Prozesskammer erstreckt. Die Hauptgaseinlassöffnungen 120 und die Leitgaseinlassöffnungen 121 sind insgesamt im Wesentlichen über eine Länge L in y-Richtung in dem Lochblech 132 angeordnet, wenn das Lochblech 132 in der Seitenwand 4b der Prozesskammer 3 angebracht ist.

Wie in Fig. 2 gezeigt, können die Leitgaseinlassöffnungen 121 z. B. im Wesentlichen als rechteckige Löcher bzw. Schlitze in dem Lochblech 132 ausgebildet sein, wobei vorzugsweise die längere Seite des Rechtecks (die Längsrichtung des Schlitzes) in y-Richtung angeordnet ist. Die Leitgaseinlassöffnungen 121 weisen vorzugsweise jeweils einen definierten Flächeninhalt G₂ auf. Vorzugsweise ist der Flächeninhalt G₂ der Leitgaseinlassöffnungen 121 größer als der Flächeninhalt G₁ der Hauptgaseinlassöffnungen 120.

Die Form der Hauptgaseinlassöffnungen 120 und der Leitgaseinlassöffnungen 121 ist grundsätzlich nicht auf einen quadratischen bzw. rechteckigen Querschnitt beschränkt, die Hauptgaseinlassöffnungen 120 und die Leitgaseinlassöffnungen 121 können jeden beliebigen Querschnitt aufweisen, beispielsweise können sie auch als kreisförmige oder dreieckige Löcher ausgebildet sein. Vorzugsweise haben die Hauptgaseinlassöffnungen 120 jeweils im Wesentlichen dieselbe Form und/oder sind gleich groß und/oder die Leitgaseinlassöffnungen 121 haben jeweils im Wesentlichen dieselbe Form und/oder sind gleich groß. Vorzugsweise sind die Leitgaseinlassöffnungen 121 größer als die die Hauptgaseinlassöffnungen 120.

Weiter sind an dem Lochblech 132 sechs Leitelemente 101a, 101b, 102a, 102b, 103a, 103b angeordnet. Die Leitelemente können beispielsweise als aufgeschraubte bzw. aufgenietete Bleche ausgebildet sein. Die Leitelemente 101a, 101b, 102a, 102b, 103a, 103b sind dabei vorzugsweise spaltfrei an dem Lochblech vorgesehen, sodass sie im Betrieb unmittelbar nach dem Austreten benachbarter Gasteilströme in die Prozesskammer diese zumindest einseitig leiten. Jedes Leitelement weist eine Höhenerstreckung in z-Richtung auf, die vorzugsweise mindestens der Höhe h' einer Spalte von Hauptgaseinlassöffnungen 120 bzw. Leitgaseinlassöffnungen 121 entspricht, Zusätzlich erstreckt sich jedes Leitelement in eine zweite Richtung senkrecht zu seiner Höhenerstreckung um eine Länge d zwischen einem ersten, an dem Lochblech vorgesehenen Ende 115 und einem zweiten Ende 116 (siehe Fig. 3a, dort nur für das Leitelement 101b gezeigt). In die dritte Raumrichtung senkrecht zur zweiten Richtung und zur Höhenerstreckung weisen die Leitelemente eine Dicke auf, die jeweils um ein Mehrfaches kleiner ist als die Höhenerstreckung und die Länge d. Die Dicke der Leitelemente 101a, 101b, 102a, 102b, 103a, 103b kann beispielsweise 0,5 mm, 1 mm oder wenige Millimeter betragen. Die Leitelemente 101a, 101b, 102a, 102b weisen jeweils eine plane Leitfläche 111 bzw. 112 sowie eine weitere plane Fläche 111' bzw. 112' auf ihrer entgegen gesetzten Seite auf. Beide Leitelemente 103a, 103b sind im Wesentlichen aus zwei ebenen, d. h. planen, und paarweise zueinander parallelen Leitflächen 113, 113' gebildet.

Die Leitelemente 101a und 101b sind zu beiden Seiten eines rechteckigen Feldes mit den Hauptgaseinlassöffnungen 120 angeordnet. Sie sind in y-Richtung im Wesentlichen direkt an diese anschließend so an dem Lochblech 132 angeordnet, dass ihre Leitflächen 111 jeweils der Hauptströmung 30 zugewandt sind, die im Betrieb der (nicht gezeigten) Gasfördervorrichtung durch die Hauptgaseinlassöffnungen 120 in die Prozesskammer 3 einströmt. Die weiteren Flächen 111' sind, wie oben beschrieben, jeweils auf der der Hauptströmung 30 abgewandten Seite des Leitelements 101a, 101b vorgesehen (s. auch Fig. 3a). Die Flächen 111' haben keine unmittelbar strömungsführende bzw. -leitende Funktion, da sie jeweils abgewandt von der in die Prozesskammer eingeführten Hauptströmung 30 und von weiteren gerichteten Prozessgasströmen liegen. Die Leitelemente 101a, 101b sind dabei so an dem Lochblech 132 angeordnet, dass ihre Leitflächen 111 im Wesentlichen senkrecht zu Öffnungsflächen der Hauptgaseinlassöffnungen 120 bzw. zur hier einheitlichen Öffnungsebene des Gaseinlasses angeordnet sind. Sie sind somit parallel zu einer Hauptströmungsrichtung, in der die Hauptströmung 30 im Betrieb der (nicht gezeigten) Gasfördervorrichtung durch die Hauptgaseinlassöffnungen 120 in die Prozesskammer einströmt, angeordnet (s. auch Fig. 3a).

Die weiteren Leitelemente 102a, 102b, 103a, 103b sind jeweils paarweise seitlich der Leitgaseinlassöffnungen 121 an dem Lochblech 132 angeordnet. Ihre Leitflächen 112, 113 sind jeweils einem im Betrieb der (nicht gezeigten) Gasfördervorrichtung durch die Leitgaseinlassöffnungen 121 in die Prozesskammer einströmende Leitgasströme 35, 36 (s. Fig. 3b) zugewandt. Weitere Flächen 112' sowie Leitflächen 113' sind jeweils auf der den Leitgasströmen 35, 36 abgewandten Seite des Leitelements 101a, 101b vorgesehen (s. auch Fig. 3a). Die Flächen 112' haben keine unmittelbar strömungsführende bzw. -leitende Funktion, da sie jeweils abgewandt von der in die Prozesskammer eingeführten Hauptströmung 30 und von den Leitgasströmen 35, 36 liegen. Die Leitelemente 102a, 102b, 103a, 103b sind derart an dem Lochblech 132 angeordnet, dass ihre Leitflächen 112, 113, 112', 113' in einem einheitlichen Winkel zu einer Senkrechten S auf eine Öffnungsfläche der Leitgaseinlassöffnungen 121 stehen (s. auch Fig. 3a).

Vorzugsweise ist das Lochblech 132 somit achsensymmetrisch bezüglich einer sich in z-Richtung erstreckenden Mittelachse ausgebildet.

Somit flankieren die Leitelemente 101a, 101b das Feld der Hauptgaseinlassöffnungen 120 mit der Länge L₁ bzw. zumindest abschnittsweise den im Betrieb der (nicht gezeigten) Gasfördervorrichtung durch die Hauptgaseinlassöffnungen 120 in die Prozesskammer einströmende Hauptströmung 30 zumindest über die Höhe h'. Ebenso flankieren die Leitelemente 102a, 102b, 103a, 103b zwei Felder der Leitgaseinlassöffnungen 121 bzw. zumindest abschnittsweise die im Betrieb der (nicht gezeigten) Gasfördervorrichtung durch die Leitgaseinlassöffnungen 121 in die Prozesskammer einströmenden Leitgasströme 35, 36 (s. Fig. 3b) zumindest über die Höhe h'.

Fig. 3a zeigt eine schematische Draufsicht auf die Oberfläche 18 des Prozesskammerbodens 4d und das Baufeld 8 von oben. Das Baufeld ist vorzugsweise rechteckig und weist eine Länge N (in x-Richtung) und eine Breite M (in y-Richtung) auf. Der Beschichter 16 ist in Fig. 3a in einer Ruheposition außerhalb des Baufelds 8 angeordnet und ist in Beschichtungsrichtung B (in y-Richtung) über die Breite M des Baufelds bewegbar, Das Lochblech 132 ist in der Draufsicht entlang einer ersten Seite des Baufelds 8 angeordnet und verläuft parallel zu ihr. Der Gasauslass 34 ist entlang einer zweiten, der ersten Seite gegenüberliegenden Seite des Baufelds 8 angeordnet und verläuft ebenfalls parallel zu dieser. Der Gaseinlass bzw. das Lochblech 132 und der Gasauslass 34 erstrecken sich im Wesentlichen entlang der Breite M des Baufelds 8 (d. h. in y-Richtung), wobei die Länge L₁ des Lochblechs 132 und eine Länge L' des Gasauslasses 34 entlang der Breite M des Baufelds 8, d. h. in horizontale Richtung (parallel zur Arbeitsebene 7), mindestens so groß, vorzugsweise größer ist wie bzw. als die Breite M des Baufelds 8.

Wie in Fig. 3a gezeigt, erstrecken sich das Lochblech 132 und der Gasauslass 34 entlang der Breite M des Baufelds 8, d. h. in y-Richtung, nicht über die gesamte Ausdehnung der Prozesskammer 3 und sind somit von der Prozesskammerwandung 4 beabstandet,

In der in Fig. 3a gezeigten Draufsicht sind zudem die an dem Lochblech angeordneten Leitelemente 101a, 101b, 102a, 102b, 103a, 103b gezeigt. Da sie wie oben beschrieben lediglich eine geringe Dicke aufweisen, sind sie in der Draufsicht in Fig. 3a als Linien dargestellt, Sie erstrecken sich jeweils von dem ersten, an dem Lochblech 132 angebrachten Ende 115 zu dem Baufeld hin (d. h. in x-Richtung) zu dem zweiten Ende 116, wobei die Enden 115, 116 der besseren Übersichtlichkeit halber lediglich für das Leitelement 101b gezeigt sind. Das erste Ende 115 ist in einem ersten Abstand d₁ zum Baufeld angeordnet und das zweite Ende 116 ist in einem zweiten Abstand d₂ zum Baufeld angeordnet, wobei der erste Abstand d₁ größer ist, beispielsweise um 10 cm größer, als der zweite Abstand da.

Wie am besten aus Fig. 3a ersichtlich, sind die an den Leitgaseinlassöffnungen 121 vorgesehenen Leitelemente 102a, 102b, 103a, 103b so an dem Lochblech 132 angeordnet, dass ihre Leitflächen 112, 113, 112', 113' jeweils in einem Winkel α (α > 0°; beispielsweise α = 10° oder α = 15°) zur Senkrechten S auf eine Öffnungsfläche der Leitgaseinlassöffnungen 121 angeordnet sind und entsprechend in einem Winkel β = 90°- α zur Seitenwand 4b der Prozesskammer 3,

Fig. 3b zeigt beispielhaft im Betrieb der Gasfördervorrichtung in der Prozesskammer 3 erzeugte Gasströme in der in Fig. 3a gezeigten Draufsicht. Die Gasströme sind dabei beispielhaft in einer baufeldparallelen Schnittebene (x-y-Ebene) dargestellt, welche in dem unteren Höhenbereich der Prozesskammer liegt. Der besseren Übersichtlichkeit halber sind die in Fig. 3a gezeigten Leitelemente in Fig. 3b nicht gezeigt. Auch sind von den Gaseinlassteilströmen 31 (s. u.) lediglich beispielhaft einige und nicht alle gezeigt.

Die durch die Hauptgaseinlassöffnungen 120 des Lochblechs 132 in die Prozesskammer 3 einströmenden Gaseinlassteilströme 31 bilden eine Hauptströmung 30, die die Prozesskammer 3 im Wesentlichen in einer einzigen Hauptströmungsrichtung von dem Gaseinlass 132 bzw. 32 zum Gasauslass 34, d. h. in x-Richtung, durchströmt und somit das Baufeld 8 überströmt. Senkrecht zum Baufeld 8 bzw. zur Arbeitsebene 7, d. h. in z-Richtung, erstreckt sich die Hauptströmung 30 im Wesentlichen über den unteren Höhenbereich der Prozesskammer 3 (in Fig. 3b nicht gezeigt), z. B. in einem unteren Drittel der Prozesskammerhöhe H. Die Hauptströmung 30 wird dabei durch die Leitelemente 101a, 101b zumindest abschnittsweise, d. h. seitlich (in y-Richtung) und über die Länge d zwischen dem ersten Ende 115 und dem zweiten Ende 116 der Leitelemente (in x-Richtung), geführt und abgeschirmt. Insbesondere die der Hauptströmung 30 zugewandten Leitflächen 111 sorgen dabei für eine Führung der Hauptströmung 30, d. h. sie verhindern ein Ausbreiten und/oder Ausweichen der Hauptströmung in y-Richtung. Insbesondere die der Hauptströmung 30 abgewandten Leitflächen 111' sorgen für eine Abschirmung der Hauptströmung 30 gegen eine potenziell auftretende Störströmung bzw. Nebenströmung (s. u.) in dem nicht gerichtet durchströmten Bereich zwischen der Leitfläche 111' und 112', Mit anderen Worten halten die Leitflächen 111' eine derartige Stör- bzw. Nebenströmung zumindest abschnittsweise von der Hauptströmung 30 ab und lassen jene dort im Wesentlichen unbeeinträchtigt strömen. Somit bilden die Leitelemente 101a, 101b eine Grenzzone gemäß vorliegender Erfindung.

Analog bilden die durch die Leitgaseinlassöffnungen 121 einströmenden Gaseinlassteilströme (in Fig. 3a nicht gezeigt) zwei Leitgasströme 35, 36 seitlich der Hauptströmung 30. Durch die Neigung der Leitelemente 102a, 102b, 103a, 103b bzw. deren Leitflächen 112, 113, 112', 113' zur Senkrechten S auf die Öffnungsfläche der Leitgaseinlassöffnungen 121 (Winkel α) strömen die Leitgasströme 35, 36 im Wesentlichen in dem Winkel α aus den Leitgaseinlassöffnungen 121 in die Prozesskammer 3. Für den bevorzugten Fall, dass der Flächeninhalt G₂ der Leitgaseinlassöffnungen 121 jeweils größer ist als der Flächeninhalt G₁ der Hauptgaseinlassöffnungen 120, ist der Volumenstrom der aus den Leitgaseinlassöffnungen 121 austretenden Leitgasströme 35, 36 pro einzelne Öffnung größer als der Volumenstrom der aus den Hauptgaseinlassöffnungen 120 austretenden Hauptströmung 30. Die den Leitgasströmen 35, 36 zugewandten Leitflächen 112, 113 bilden zumindest abschnittsweise einen (nach oben und unten, d. h. in z-Richtung, offenen) Strömungskanal zur abschnittsweisen Führung der Leitgasströme 35, 36, Die den Leitgasströmen 35, 36 abgewandten Leitflächen 113' dienen ebenfalls der Führung der Leitgasströme 35, 36, indem sie diese von einer Stör- bzw. Nebenströmung (s. u.) abschirmen. Somit bilden die Leitelemente 103a, 103b ebenfalls eine Grenzzone gemäß vorliegender Erfindung.

in Fig. 3b sind ferner seitlich (in y-Richtung) des von der Hauptströmung 30 und den Leitgasströmen 35, 36 durchströmten Bereichs weitere Bereiche des unteren Höhenbereichs gezeigt, in denen sich eine oben beschriebene Stör- bzw. Nebenströmung 37 ausbilden kann. Die Stör- bzw. Nebenströmung 37 kann dabei insbesondere eine ungerichtete, verwirbelte Gasströmung sein und ist daher in Fig. 3b durch Verwirbelungen, d. h. kreisförmige Pfeile, angedeutet. Der Winkel α, in dem die Leitgasströme 35, 36 in die Prozesskammer 3 eintreten, berücksichtigt bzw. antizipiert eine häufige, beispielsweise in Tests ermittelte Beeinflussung der Leitgasströme 35, 36 durch die Stör- bzw. Nebenströmung 37 derart, dass die Leitgasströme 35, 36 in ihrem weiteren Strömungsverlauf im Wesentlichen parallel zur Hauptströmung 30 strömen, d. h. im Wesentlichen entlang der Hauptströmungsrichtung. Gleichzeitig strömen sie neben der Hauptströmung 30 und/oder in einem Bereich außerhalb des Baufelds 8, so dass sie die Hauptströmung 30 in y-Richtung zumindest abschnittsweise flankieren. Somit sorgen die Leitgasströme 35, 36 ebenfalls für eine zumindest abschnittsweise Führung bzw. Abschirmung der Hauptströmung 30 und bilden eine Grenzzone gemäß vorliegender Erfindung.

Die in Fig. 2 und 3a gezeigten Leitelemente 101a, 101b, 102a, 102b, 103a, 103b des Lochblechs 132 sind unabhängig von ihrer Orientierung im Raum alle identisch ausgebildet. Sie können jedoch zumindest teilweise auch unterschiedlich ausgebildet sein, insbesondere in zumindest eine Richtung unterschiedliche Abmessungen aufweisen. Auch können sie eine nicht unerhebliche Dickenerstreckung haben; beispielsweise können die zwischen der Hauptströmung 30 und den Leitgasströmungen 35, 36 vorgesehenen Leitelemente 101a, 102a bzw. 101b, 102b jeweils integral als ein einziges Leitelement ausgebildet sein mit jeweils der der Leitgasströmung 35 bzw. 36 zugewandten Leitfläche 112 und der der Hauptströmung 30 zugewandten Leitfläche 111. Die in Fig. 2 dargestellte Ausführungsform bietet demgegenüber die Vorteile konstruktiver Einfachheit bzw. kostengünstiger Herstellung und ist besonders wartungsfreundlich, da sie mit ihrer sehr kleinen horizontalen Flächenausdehnung Ablagerungen von Partikeln an ihrer Oberseite vermeidet bzw. so gering wie möglich hält.

Die Leitelemente können auch von der in den Figuren gezeigten Form abweichen, beispielsweise müssen die Leitflächen keine ebenen, d. h. planen Flächen sein, sondern die Leitelemente können z. B. auch gekrümmte Flächen aufweisen.

In Bezug auf Fig. 2, 3a und 3b sind oben drei Maßnahmen zum Verbessern der Strömungseigenschaften der Hauptströmung 30 bzw. der Leitgasströme 35, 36 beschrieben, es müssen jedoch nicht alle drei der beschriebenen Maßnahmen verwirklicht sein. So kann das Lochblech 132 beispielsweise auch nur mit den Hauptgaseinlassöffnungen 120 und mit den diese bzw. die im Betrieb der Gasfördervorrichtung erzeugte Hauptströmung 30 abschnittsweise flankierenden Leitelementen 101a, 101b bereitgestellt sein, d. h. ohne die Leitgaseinlassöffnungen 121 und die Leitelemente 102a, b, 103a, b, Auch kann das Lochblech 132 beispielsweise ohne die Leitgaseinlassöffnungen 121 bereitgestellt sein, d. h. die Leitgaseinlassöffnungen sind identisch zu den Haupteinlassöffnungen 120 ausgebildet. Auch kann das Lochblech 132 beispielsweise ohne die die Hauptgaseinlassöffnungen 120 flankierenden Leitelemente 101a, 101b bereitgestellt sein. Auch müssen die Leitelemente 101a, b, 102a, b, 103a, b und/oder die Leitgaseinlassöffnungen 121 nicht beidseitig, insbesondere symmetrisch, an dem Lochblech 132 vorgesehen sein. Beispielsweise können die Leitelemente 101a, 101b, 102a, 102b, 103a, 103b und/oder die Leitgaseinlassöffnungen 121 zumindest teilweise nur an einem Ende (in Bezug auf die y-Richtung) des Lochblechs 132 vorgesehen sein.

Für die Hauptgaseinlassöffnungen 120 und die Leitgaseinlassöffnungen 121 des Lochblechs 132 kann eine gemeinsame oder separate Gaszufuhr(en) bereitgestellt sein,

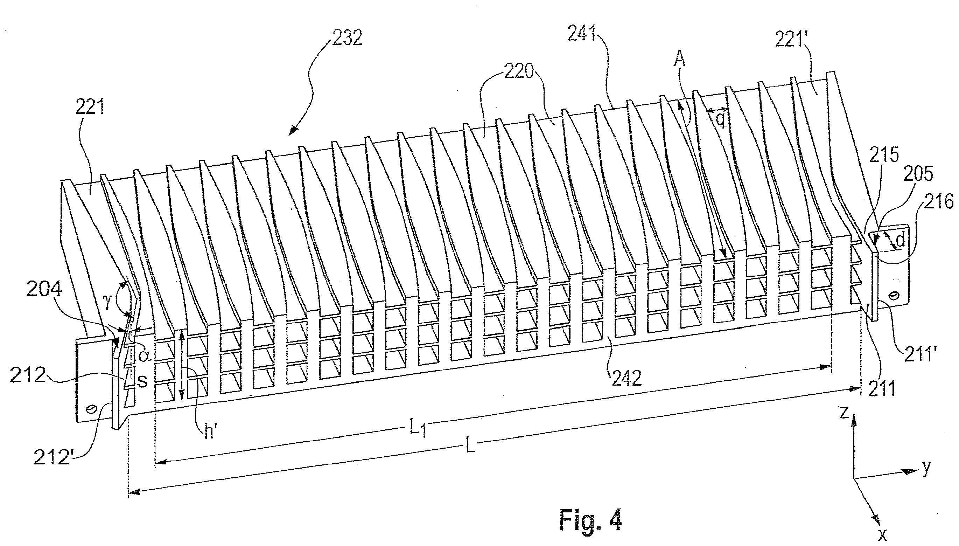

Fig. 4 zeigt ein Düsenelement 232 als zur Verwendung in dem in Fig. 1 gezeigten Gaseinlass 32. Zur besseren Veranschaulichung des Düsenelements 232 ist es in einer Schnittansicht gezeigt, d. h. die oberste Zeile von Gaseinlasskanälen 220, 221 (s. u.) ist im Schnitt dargestellt, um eine Darstellung des Innenraums der Gaseinlasskanäle zu ermöglichen.

Das Düsenelement 232 unterscheidet sich von dem in Bezug auf Fig. 2, 3a und 3b beschriebenen Lochblech 132 im Wesentlichen dadurch, dass es zum Einleiten des Prozessgases in die Prozesskammer 3 anstelle der Gaseinlassöffnungen 120, 121 (s. Fig. 2) Gaseinlasskanäle 220, 221 umfasst, d. h. in dieser Hinsicht deutlich stärker dreidimensional ausgebildet ist.

Das Düsenelement 232 ist aus einem Körper aus einem festen Material gebildet, der von einer Gaseintrittsseite 241 zu einer Gasaustrittsseite 242 hin von einer Mehrzahl von Gaseinlasskanälen 220, 221, 221' durchdrungen wird. Die Gaseinlasskanäle 220, 221, 221' sind allseitig durch Wände begrenzt und bilden im Betrieb des Düsenelements 232 in einer Gaszuleitung (nicht gezeigt) zu der Prozesskammer 3 der additiven Herstellvorrichtung 1 die einzige gasdurchlässige Verbindung von der Gaseintrittsseite 241 durch das Düsenelement 232 hindurch zur Gasaustrittsseite 242. Die Gaseinlasskanäle 220, 221, 221' erstrecken sich in eine Erstreckungsrichtung über eine Distanz A, wobei die Erstreckungsrichtung der Gaseinlasskanäle 220, 221, 221' der Durchströmungsrichtung des Gases durch das Düsenelement 232 von der Gaseintrittsseite 241 zur Gasaustrittsseite 242, d. h. der x-Richtung, entspricht.

Die Gaseinlasskanäle 220, 221, 221' sind vorzugsweise, wie in Fig. 4 gezeigt, in Bezug auf die y-z-Ebene neben- und untereinander regelmäßig voneinander beabstandet in Zeilen und Spalten in dem Düsenelement 232 angeordnet. Dabei sind die Zeilen von Gaseinlasskanälen im eingebauten Zustand des Düsenelements 232 vorzugsweise parallel zum Baufeld 8 angeordnet. Die Zeilen und/oder Spalten können auch zueinander versetzt sein (in Fig. 4 nicht gezeigt).

Das Düsenelement 232 weist eine Mehrzahl von Hauptgaseinlasskanälen 220 und eine Mehrzahl von Leitgaseinlasskanälen 221, 221' auf, wobei die Leitgaselnlasskanäle 221, 221' in Fig. 4 als jeweils eine Spalte von Gaseinlasskanälen in Bezug auf die y-Richtung neben den Hauptgaseinlasskanälen 220 vorgesehen sind. Es kann auch jeweils mehr als eine Spalte von Leitgaseinlasskanälen 221, 221' vorgesehen sein.

Eine Zeile von Hauptgaseinlasskanälen 220 erstreckt sich, analog zu einer Zeile der Hauptgaseinlassöffnungen 120 des in Fig. 2 gezeigten Lochblechs 132, im Wesentlichen über eine Länge L₁ in y-Richtung und eine Spalte von Hauptgaseinlasskanälen 220 erstreckt sich im Wesentlichen über eine Höhe h' in z-Richtung, wenn das Düsenelement 232 im Betrieb in der Seitenwand 4b der Prozesskammer 3 bzw. in einem Öffnungsbereich der Gaszuleitung (nicht gezeigt) zur Prozesskammer 3 angebracht ist. Dabei entspricht die Höhe h' vorzugsweise annähernd der ersten Höhe h₁ (vgl. Fig. 1), bis zu der sich der untere Höhenbereich der Prozesskammer 3 erstreckt.

Eine Spalte von Leitgaseinlasskanälen 221, 221' erstreckt sich ebenfalls im Wesentlichen über eine Höhe h' in z-Richtung, wenn das Düsenelement 232 in der Seitenwand 4b der Prozesskammer 3 angebracht ist, wobei die Höhe h' vorzugsweise der ersten Höhe h₁ entspricht (vgl. Fig. 1), bis zu der sich der untere Höhenbereich der Prozesskammer 3 erstreckt. Die Hauptgaseinlasskanäle 220 und die Leitgaseinlasskanäle 221, 221' sind insgesamt im Wesentlichen über eine Länge L in y-Richtung in dem Düsenelement 232 angeordnet.

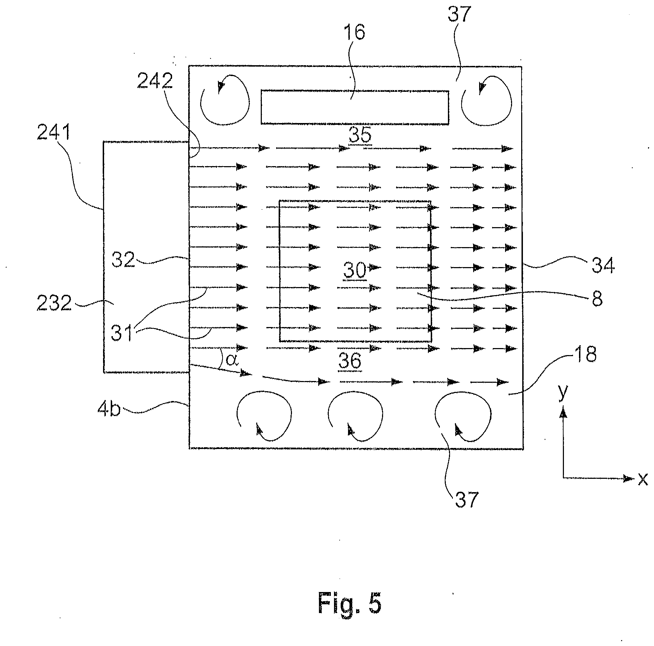

Vorzugsweise ist zumindest die Länge L₁ des Düsenelements 232, weiter bevorzugt die Länge L' des Düsenelements 232, entlang einer Breite M des Baufelds 8, d. h. in horizontaler Richtung (parallel zur Arbeitsebene 7), mindestens so groß, vorzugsweise größer wie bzw. als die Breite M des Baufelds 8 (vgl. Fig. 5 in Zusammenschau mit Fig. 3a).

Das Düsenelement 232 weist einen quaderförmigen Grundkörper auf, der sich im Betrieb bündig in eine Gaszuleitung einer additiven Herstellvorrichtung mit zumindest im Endbereich quaderförmigem Gaszuleitungsquerschnitt einpasst. Es weist an seiner dem Betrachter von Figur 4 näherliegenden Vorderseite seitlich jeweils einen Flansch zur Befestigung des Düsenelements 232 z. B. an der Prozesskammerwandung 4 auf. Eine bounding box um die Hohlräume der Hauptgaseinlasskanäle 220 entspricht einem Quader mit geringfügigen kleineren Abmessungen als der Grundkörper. Der durch die Batterie von Hauptgaseinlasskanälen 220 geformte Gasstrom weist zumindest unmittelbar nach seinem Austreten in die Prozesskammer 3 einen entsprechend im Wesentlichen rechteckigen Querschnitt auf.

Die Hauptgaseinlasskanäle 220 weisen in der y-z-Ebene, d. h. senkrecht zu ihrer Erstreckungsrichtung, jeweils eine Kanalquerschnittsfläche, in Fig. 4 durch den Öffnungsdurchmesser q in y-Richtung gekennzeichnet, auf. Die Kanalquerschnittsfläche hat bei dem in Fig. 4 gezeigten Ausführungsbeispiel eine quadratische oder rechteckige Form und variiert über die Erstreckungsrichtung bzw. die Distanz A der Hauptgaseinlasskanäle 220 zumindest abschnittsweise, d. h. sie ist nicht konstant. In Fig. 4 nimmt der Öffnungsdurchmesser q in einem ersten Abschnitt der Hauptgaseinlasskanäle 220 von der Gaseintrittsseite 241 des Düsenelements 232 in Richtung der Gasaustrittsseite 242 ab, in einem anschließenden zweiten (mittleren) Abschnitt der Hauptgaseinlasskanäle 220 ist der Öffnungsdurchmesser q im Wesentlichen konstant. In einem anschließenden dritten, bis zur Gasaustrittsseite 242 reichenden Abschnitt nimmt der Öffnungsdurchmesser q in Richtung der Gasaustrittsseite 242 zu. Mit anderen Worten nimmt der Öffnungsdurchmesser in dem dritten Abschnitt ausgehend von der Gasaustrittsseite 242 in Richtung der Gaseintrittsseite 241 hin ab. Die Hauptgaseinlasskanäle 220 umfassen somit von der Gaseintrittsseite 241 zur Gasaustrittsseite 242, d. h. in Durchströmungsrichtung des Gases, zuerst einen konvergenten Abschnitt, d. h. einen als Düse bzw. Konfusor ausgebildeten Abschnitt, dann einen im Wesentlichen konstanten Abschnitt und anschließend einen divergenten Abschnitt, d. h. einen als Diffusor ausgebildeten Abschnitt. Die Querschnittsveränderung entlang der Distanz A, d. h. der Erstreckungsrichtung der Hauptgaseintrittskanäle, muss nicht wie in Fig. 4 gezeigt in y-Richtung realisiert sein. Alternativ oder zusätzlich kann die Querschnittsveränderung auch in z-Richtung, d. h. entlang der Höhe h' des Düsenelements 232, realisiert sein.

Eine Steigung der Querschnittsveränderung, d. h. die Querschnittsverringerung in dem ersten Abschnitt und die Querschnittsvergrößerung in dem dritten Abschnitt der Hauptgaseinlasskanäle 220 verläuft vorzugsweise kontinuierlich, d. h. monoton, insbesondere streng monoton, wie in Fig. 4 gezeigt. Beispielsweise kann die Steigung der Querschnittsveränderung im ersten und/oder dritten Abschnitt linear sein. Alternativ kann die Querschnittsveränderung auch gestuft, d. h. unstetig ausgebildet sein,

Die Kanalquerschnittsfläche der in Fig. 4 gezeigten Leitgaseinlasskanäle 221, 221' variiert ebenfalls zumindest abschnittsweise entlang der Erstreckungsrichtung der Leitgaseinlasskanäle 221, 221'. Die Leitgaseinlasskanäle 221, 221' weisen ebenfalls einen ersten, als Düse ausgebildeten ersten Abschnitt auf, d. h. einen ersten Abschnitt, in dem sich die Kanalquerschnittsfläche der Leitgaseinlasskanäle 221, 221' ausgehend von der Gaseintrittsseite 241 in Richtung der Gasaustrittsseite 242 verringert. Weiter weisen die Leitgaseinlasskanäle 221, 221' einen zweiten, an die Gasaustrittsseite 242 anschließenden Abschnitt auf, der eine im Wesentlichen konstante Kanalquerschnittsfläche aufweist, Dieser zweite Abschnitt verläuft (in Gasdurchflussrichtung) zunächst gekrümmt und anschließend in gerader Richtung. Wird eine Erstreckungsrichtung der Leitgaseinlasskanäle 221, 221' über eine virtuelle Linie definiert, die durch die Schwerpunkte der Kanalquerschnittsflächen verläuft, ergibt sich ein Polygonzug mit mehrfacher Richtungsänderung als Erstreckungsrichtung.

Die Leitgaseinlasskanäle 221, 221' sind hier somit ohne den dritten Abschnitt der Hauptgaseinlasskanäle 220 ausgebildet, in dem sich die Kanalquerschnittsfläche der Hauptgaseinlasskanäle 220 zu der Gasaustrittsseite 242 hin vergrößert, d. h. die Leitgaseinlasskanäle 221, 221' sind ohne den als Diffusor ausgebildeten dritten Abschnitt bereitgestellt, Somit weisen die Leitgaseinlasskanäle 221, 221' an der Gasaustrittsseite 242 des Düsenelements 232 eine beispielsweise um den Faktor 2 oder 3 kleinere Kanalquerschnittsfläche auf als die Hauptgaseinlasskanäle 220, Dadurch erfährt das aus den Leitgaseinlasskanälen 221, 221' in die Prozesskammer 3 hinein ausströmende Prozessgas im Betrieb der Gasfördervorrichtung und bei in der Vorrichtung 1 angebrachtem Düsenelement 232 eine größere Strömungsgeschwindigkeit im Vergleich mit der Strömungsgeschwindigkeit des aus den Hauptgaseinlasskanälen 220 ausströmenden Gases.

Das in Fig. 4 gezeigte Düsenelement 232 umfasst eine erste Spalte von Leitgaseinlasskanälen 221 an einem ersten Ende des Düsenelements 232 und eine zweite Spalte von Leitgaseinlasskanälen 221' an einem zweiten Ende des Düsenelements 232, wobei die erste Spalte und die zweite Spalte in y-Richtung voneinander beabstandet sind und die Hauptgaseinlasskanäle 220 zwischen sich an zwei Seiten umrahmen. Die Leitgaseinlasskanäle 221 der ersten Spalte unterscheiden sich von den Leitgaseinlasskanälen 221' der zweiten Spalte in einer Erstreckungsrichtung des zweiten Abschnitts, welcher eine im Wesentlichen konstante Kanalquerschnittsfläche aufweist und der an die Gasaustrittsseite anschließende Abschnitt ist. Wie aus Fig. 4 ersichtlich, ist die Erstreckungsrichtung des zweiten Abschnitts der Leitgaseinlasskanäle 221' der zweiten Spalte im Wesentlichen parallel zur Erstreckungsrichtung des ersten Abschnitts der Leitgaseinlasskanäle 221' und parallel zu einer Senkrechten S auf eine Öffnungsfläche der Gaseinlasskanäle 220, 221, 221' angeordnet. Dagegen ist der zweite Abschnitt der Leitgaseinlasskanäle 221 der ersten Spalte in einem Winkel γ zu dem ersten Abschnitt der Leitgaseinlasskanäle 221 angeordnet und somit in einem Winkel α zu der Senkrechten S auf eine Offnungsfläche der Gaseinlasskanäle 220, 221, 221' angeordnet, der etwa 15° beträgt. Somit tritt im Betrieb der Gasfördervorrichtung und bei in der Vorrichtung 1 angebrachtem Düsenelement 232 das Gas in einem Winkel α zu der Senkrechten S auf eine Öffnungsfläche der Gaseinlasskanäle 220, 221, 221' aus den Leitgaseinlasskanälen 221 aus. Aus den Hauptgaseinlasskanälen 220 und den Leitgaseinlasskanälen 221' der zweiten Spalte hingegen tritt das Gas im Betrieb und bei eingebautem Düsenelement 232 hingegen im Wesentlichen senkrecht zur Öffnungsfläche der Gaseinlasskanäle 220, 221, 221', d. h. parallel zur Senkrechten S, aus dem Düsenelement 232 aus.

Weiter umfasst das in Fig. 4 gezeigte Düsenelement 232 ein erstes Leitelement 204 und ein zweites Leitelement 205 an der Gasaustrittsseite 242 des Düsenelements 232, Das erste Leitelement 204 und das zweite Leitelement 205 können beispielsweise als dünne Bleche ausgebildet sein. Vorzugsweise ist das Düsenelement 232 mit seinen in Fig. 4 gezeigten Elementen als einstückiges Bauteil ausgebildet. Es kann z. B. mittels eines Spritzgussverfahrens oder eines additiven Fertigungsverfahrens aus einem beliebigen Material, z. B. Metall oder Kunststoff, hergestellt werden. Die Leitelemente 204, 205 sind dabei vorzugsweise spaltfrei an der Gasaustrittsseite 242 des Düsenelements 232 vorgesehen. Jedes der Leitelemente 204, 205 weist eine Höhenerstreckung in z-Richtung auf, die vorzugsweise der Höhe h' einer Spalte von Gaseinlassöffnungen 220, 221, 221' entspricht, und erstreckt sich in eine zweite Richtung senkrecht zu seiner Höhenerstreckung um eine Länge d zwischen einem ersten, an der Gasaustrittsseite 242 des Düsenelements 232 vorgesehenen Ende 215 und einem zweiten Ende 216 (in Fig. 4 nur für das zweite Leitelement 205 gezeigt). In die dritte Richtung senkrecht zur zweiten Richtung und zur Höhenerstreckung weisen die Leitelemente 204, 205 eine Dicke auf, die jeweils um ein Mehrfaches kleiner ist als die Höhenerstreckung und die Länge d. Somit sind die Leitelemente 204, 205 im Wesentlichen aus jeweils zwei ebenen, d. h. planen, und paarweise zueinander parallelen Leitflächen 211, 211' bzw. 212, 212' gebildet. In Fig. 4 ist die Leitfläche 211' des zweiten Leitelements 205 durch dessen Leitfläche 211 verdeckt und die Leitfläche 212' des ersten Leitelements 204 durch die Leitfläche 212,

Das erste Leitelement 204 ist seitlich der ersten Spalte von der Leitgaseinlasskanälen 221 auf der den Hauptgaseinlasskanälen 220 abgewandten Seite der ersten Spalte von Leitgaseinlasskanälen 221 angeordnet und das zweite Leitelement 205 ist seitlich der zweiten Spalte von der Leitgaseinlasskanälen 221' auf der den Hauptgaseinlasskanälen 220 abgewandten Seite der zweiten Spalte von Leitgaseinlasskanälen 221' angeordnet.

Die Leitflächen 212, 211 sind so an den Leitelementen 204 bzw. 205 vorgesehen, dass sie bei in der Vorrichtung 1 angebrachtem Düsenelement 232 und im Betrieb der (nicht gezeigten) Gasfördervorrichtung durch die Leitgaseinlasskanäle 221 bzw. 221' in die Prozesskammer einströmenden Leitgasströmen 35, 36 (s. Fig. 5) zugewandt sind. Die Leitflächen 212', 211' sind entsprechend jeweils auf der den Leitgasströmen 35, 36 abgewandten Seite des Leitelements 204 bzw. 205 vorgesehen.

Die Leitelemente 204, 205 sind dabei vorzugsweise so an dem Düsenelement 232 angeordnet, dass sie sich von ihrem ersten Ende 215 zu ihrem zweiten Ende 216 jeweils parallel zu einer Richtung erstrecken, in der Gas 30 im Betrieb der Gasfördervorrichtung und bei in der Vorrichtung 1 eingebautem Düsenelement 232 durch die jeweiligen Leitgaseinlasskanäle 221, 221' in die Prozesskammer eintritt. Mit anderen Worten sind die Leitelemente 204, 205 bzw. deren Leitflächen 211, 211', 212, 212' vorzugsweise parallel zu der jeweiligen Erstreckungsrichtung des zweiten Abschnitts der jeweiligen Leitgaseinlasskanäle 221 bzw. 221' vorgesehen. Dies bedeutet, dass das erste Leitelement 204 bzw. dessen Leitflächen 212, 212' vorzugsweise in einem Winkel α zur Senkrechten S auf die Öffnungsfläche der Gaseinlasskanäle 220, 221, 221' angeordnet ist bzw. sind und das zweite Leitelement 205 bzw. dessen Leitflächen 211, 211' vorzugsweise parallel zur Senkrechten S auf die Öffnungsfläche der Gaseinlasskanäle 220, 221, 221' angeordnet ist bzw. sind.

Ein Vorteil dieser Ausgestaltung der Leitgaseinlasskanäle 221 der ersten Spalte von Leitgaseinlasskanälen 221 ist, dass dadurch eine Richtungsänderung des im Betrieb durch den Leiteinlasskanal 221 strömenden Gases bereits innerhalb des Leiteinlasskanals 221 bzw. in dessen zweitem Abschnitt erzielt wird, und nicht durch das erste Leitelement 204 bzw. dessen Leitfläche 212. Dies führt zu einer enger definierten Richtung des Leitgasstroms 36 und einer Verminderung von Turbulenzen desselben. Im Unterschied dazu weisen die in Fig. 4 gezeigten Leiteinlasskanäle 221' der zweiten Spalte von Leitgaseinlasskanälen 221' im Wesentlichen keine Richtungsänderung auf,

Fig. 5 zeigt eine schematische Draufsicht auf die Oberfläche 18 des Prozesskammerbodens 4d und das Baufeld 8 von oben bei Verwendung des in Fig. 4 gezeigten Düsenelements 232 als Gaseinlass, sowie beispielhaft im Betrieb der Gasfördervorrichtung in der Prozesskammer 3 erzeugte Gasströme. Die Gasströme sind dabei beispielhaft in einer baufeldparallelen Schnittebene (x-y-Ebene) dargestellt, welche in dem unteren Höhenbereich der Prozesskammer liegt. Der besseren Übersichtlichkeit halber sind die in Fig. 4 gezeigten Leitelemente 204, 205 in Fig. 5 nicht gezeigt, Auch sind von den Gaseinlassteilströmen 31 (s. u.) lediglich beispielhaft einige und nicht alle gezeigt,

Fig. 5 zeigt dabei analoge Elemente der Vorrichtung 1 wie die Figuren 3a und 3b, deren Beschreibung daher an dieser Stelle nicht wiederholt wird.

Das Düsenelement 232 ist, wie in Fig. 5 gezeigt, vorzugsweise so an bzw. außerhalb der Prozesskammer 3 angeordnet, dass seine Gasaustrittsseite 242 im Wesentlichen bündig mit der Innenseite der Seitenwand 4b der Prozesskammer vorgesehen ist.

Die durch die Hauptgaseinlasskanäle 220 des Düsenelements 232 in die Prozesskammer 3 eingeströmten Gaseinlassteilströme 31 bilden eine Hauptströmung 30, die die Prozesskammer 3 im Wesentlichen in einer Hauptströmungsrichtung von dem Gaseinlass 232 bzw. 32 zum Gasauslass 34, d. h. in x-Richtung, durchströmt und somit das Baufeld 8 überströmt. Senkrecht zum Baufeld 8 bzw. zur Arbeitsebene 7, d. h. in z-Richtung, erstreckt sich die Hauptströmung 30 im Wesentlichen über den unteren Höhenbereich der Prozesskammer 3 (in Fig. 5 nicht gezeigt). Analog bilden die durch die Leitgaseinlasskanäle 221 der ersten Spalte von Leitgaseinlasskanälen einströmenden Gaseinlassteilströme (in Fig. 5 nicht gezeigt) einen ersten Leitgasstrom 36 und die durch die Leitgaseinlasskanäle 221' der zweiten Spalte von Leitgaseinlasskanälen einströmenden Gaseinlassteilströme bilden einen zweiten Leitgasstrom 35. Die Leitgasströme 35, 36 durchströmen die Prozesskammer 3 dabei in y-Richtung jeweils seitlich der Hauptströmung 30. Der durch die erste Spalte von Leitgaseinlasskanälen 221 einströmende erste Leitgasstrom 36 tritt dabei, wie bereits oben beschrieben, in dem Winkel α zu der Senkrechten S auf die Öffnungsfläche der Gaseinlasskanäle bzw. in dem Winkel α zur Hauptströmungsrichtung der Hauptströmung 30 in die Prozesskammer ein, während der zweite Leitgasstrom 35 im Wesentlichen parallel zur Hauptströmungsrichtung in die Prozesskammer einströmt. Mit dieser unterschiedlichen Ausprägung der Leitgasströme 35, 36 wird gezielt auf die unterschiedlichen Abmessungen jener Bereiche in der Prozesskammer 3 reagiert, in denen das Prozessgas gerichtet oder ungerichtet strömen kann. Oben in Fig. 5 ist der Beschichter 16 in einer Ruheposition innerhalb der Prozesskammer angeordnet, der aufgrund seiner Längen- und Höhenerstreckung das Strömen des Prozessgases in diesem Bereich der Prozesskammer 3 erheblich beeinflusst. Eine Distanz zwischen dem Baufeld 8 bzw. dem Hauptstrom 30 und dem Beschichter 16 als nächstliegendem signifikant strömungsbeeinflussendem Element ist relativ gering. Es reicht aus, den zweiten Leitgasstrom 35 nicht oder nur in geringem Maß zur Hauptströmung 30 abzuwinkeln, da sich in dem nicht definiert beströmten Bereich der Prozesskammer 3 zwischen dem zweiten Leitgasstrom 35 und dem Gehäuse des Beschichters 16 keine signifikanten Stör- bzw. Nebenströmungen 37 ausbilden können. Unten in Fig. 5 ist die Distanz zwischen dem Hauptstrom 30 und der Prozesskammerwandung 4 als nächstliegendem signifikant strömungsbeeinflussendem Element relativ groß, sodass die Wahrscheinlichkeit einer Ausbildung von signifikanten Stör- bzw. Nebenströmungen 37 höher ist, welche die Homogenität des Hauptstroms 30 verringern, z. B. für Einschnürungen und/oder eine lokale Verringerung der Strömungsgeschwindigkeit sorgen. Der um den Winkel α abgewinkelte erste Leitgasstrom 36 antizipiert unerwünschte Effekte der Stör- bzw. Nebenströmungen 37, Wie in Fig. 5 dargestellt, ändert er - schematisch durch den zweiten Strömungspfeil von links dargestellt - seine initiale Strömungsrichtung, während er im Wesentlichen als Freistrahl baufeldnah durch die Prozesskammer 3 strömt. Er nimmt letztlich eine Orientierung parallel zum Hauptgasstrom 30 an. Die in diesem Beispiel durch den zweiten Strömungspfeil repräsentierte Richtungsänderung erfolgt durch das Einwirken der Stör- bzw. Nebenströmungen 37 in eine Richtung quer zu seiner initialen Strömungsrichtung, Ohne die zuvor eingestellte Abwinkelung um den Winkel α würde der erste Leitgasstrom 36 möglicherweise in Richtung zum Baufeld 8 abgelenkt, wodurch der Hauptgasstrom 30 gegebenenfalls verengt bzw. seine Wirksamkeit in der Abfuhr von atmosphärischen Verunreinigungen eingeschränkt würde. im Ergebnis bewirkt also der so ausgeprägte erste Leitgasstrom 36, dass eine vorgegebene Minimalbreite des Hauptstroms 30 zumindest solange, wie der Hauptstrom 30 über das Baufeld 8 fließt, zuverlässig gewahrt wird. Somit wird der erste Leitgasstrom 36 derart zwischen dem Hauptstrom 30 und den Stör- bzw. Nebenströmungen 37 in der Prozesskammer 3 positioniert, dass er stets nicht oberhalb des Baufelds 8 liegt. Der Leitgasstrom 36 dient somit als Grenzzone gemäß vorliegender Erfindung. Der höhere Volumenstrom des ersten Leitgasstroms 36 unterstützt eine räumliche Stabilität bzw. relative Ortsfestigkeit der Grenzzone auch bei den Schwankungen, denen ein komplexes System miteinander wechselwirkender Strömungen typischerweise unterliegt.

Der Volumenstrom der durch die Leitgaseinlasskanälen 221, 221' einströmenden Leitgasströme 35, 36 ist, wie ebenfalls oben beschrieben, größer als der Volumenstrom der aus den Hauptgaseinlasskanälen 220 einströmenden Gaseinlassteilströme 31 der Hauptströmung 30. Dies bewirkt, dass die Strömungsgeschwindigkeit der Leitgasströme 35, 36 über eine längere Distanz nach dem Eintreten in die Prozesskammer 3 hoch bleibt, als die Strömungsgeschwindigkeit der Hauptströmung 30,

Analog zu Fig. 3b berücksichtigt der Winkel α, in dem der Leitgasstrom 36 in die Prozesskammer 3 eintritt, eine Beeinflussung des Leitgasstroms 36 durch die Stör- bzw. Nebenströmung 37 also derart, dass der Leitgasstrom 36 in seinem weiteren Strömungsverlauf im Wesentlichen parallel zur Hauptströmung 30 strömt, d. h. im Wesentlichen entlang der Hauptströmungsrichtung, und neben der Hauptströmung 30 und/oder in einem Bereich außerhalb des Baufelds 8. Somit flankieren die Leitgasströme 35, 36 die Hauptströmung 30 zumindest abschnittsweise und sorgen so für eine zumindest abschnittsweise Führung bzw. Abschirmung der Hauptströmung 30 und bilden eine Grenzzone gemäß vorliegender Erfindung.

Dadurch, dass die Leitgasströme 35, 36 durch separat in dem Düsenelement 232 ausgebildete Leitgaseinlasskanäle 221, 221' in die Prozesskammer 3 eingeleitet werden und die Hauptströmung 30 durch die Hauptgaseinlasskanäle 30 eingeleitet wird, ist es beispielsweise möglich, wie oben beschrieben, unterschiedliche Strömungsgeschwindigkeiten der Hauptströmung 30 und der Leitgasströme 35, 36 zu erzielen. Damit kann beispielsweise eine Hauptströmung 30 bereitgestellt werden, deren Strömungseigenschaften im Wesentlichen so eingestellt sind, dass ein möglichst guter Reinigungseffekt oberhalb des Baufelds 8 erzielt wird und eine Verblasung von pulverförmigem Aufbaumaterial vom Baufeld 8 minimiert wird. Die Leitgasströme, die nicht oberhalb des Baufelds, sondern seitlich dazu versetzt verlaufen, können beispielsweise in ihren Strömungseigenschaften derart eingestellt sein, dass sie Anforderungen wie z. B. einer bestimmten Richtungsstabilität und Unempfindlichkeit gegenüber unerwünschten Stör- bzw. Nebenströmungen genügen. Beispielsweise können die Leitgasströme mit deutlich höherer, z. B. zweifacher Geschwindigkeit strömen wie die Hauptströmung, da sie in einem seitlichen Abstand zum Baufeld und zu dem dort verarbeiteten, verblasbaren Aufbaumaterial wirken und somit den additiven Herstellungsprozess nicht wesentlich beeinträchtigen.

Erfindungsgemäß dienen, wie bereits oben in Bezug auf Fig. 2 bis 3b beschrieben, die den Leitgasströmen 35, 36 zugewandten Leitflächen 211, 212 zumindest abschnittsweise der Führung der Leitgasströme 35, 36. Ebenso dienen die den Leitgasströmen 35, 36 abgewandten Leitflächen 211', 212' zumindest abschnittsweise der Führung der Leitgasströme 35, 36, indem sie diese von der Stör- bzw. Nebenströmung 37 abschirmen. Somit bilden die Leitelemente 204, 205 eine Grenzzone gemäß vorliegender Erfindung,

Das in Bezug auf eine zweite Ausbildungsform der vorliegenden Erfindung beschriebene Düsenelement 232 kann gemäß den oben in Bezug auf die erste Ausführungsform der Erfindung (Lochblech 132) beschriebenen Merkmale weitergebildet sein, sofern dies realisierbar ist. So können beispielsweise die Leitelemente 204, 205 von der beschriebenen Form und/oder Anordnung abweichen. Es können beispielsweise auch weitere Leitelemente zwischen den Hauptgaseinlasskanälen 220 und den Leitgaseinlasskanälen 221, 221' vorgesehen sein. Auch kann das Düsenelement 232 ohne Leitelemente bereitgestellt sein, d. h. neben den Hauptgaseinlasskanälen lediglich Leitgaseinlasskanäle aufweisen, oder die Hauptgaseinlasskanäle selbst können zum Einleiten der Leitgasströme 35, 36 dienen, beispielsweise durch an dem Düsenelement geeignet angebrachte Leitelemente.

In Fig. 4 ist ein Düsenelement mit im Wesentlichen quadratischen bzw. rechteckigen Kanalquerschnittsflächen der Gaseinlasskanäle gezeigt. Die Kanalquerschnittsflächen der Gaseinlasskanäle können jedoch auch von einer rechteckigen bzw. quadratischen Form abweichen, beispielsweise eine runde oder dreieckige oder jede andere Form aufweisen. Auch müssen die Gaseinlasskanäle nicht die oben beschriebene Querschnittsveränderung entlang ihrer Erstreckungsrichtung aufweisen. Beispielsweise kann eine Querschnittsveränderung anders ausgebildet sein oder die Kanalquerschnittsfläche kann über die gesamte Erstreckungsrichtung der Gaseinlasskanäle konstant ausgebildet sein.

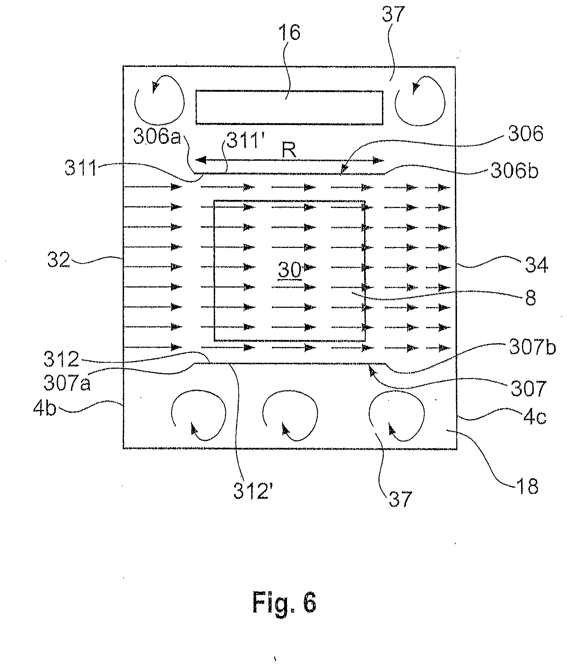

Gemäß einer dritten Ausführungsform der Erfindung sind anstelle der in Fig. 3b und Fig. 5 gezeigten Leitgasströme 35, 36 weitere Leitelemente 306, 307 vorgesehen. Die Leitelemente 306, 307 sind in Fig. 6 in einer schematischen Draufsicht auf die Oberfläche 18 des Prozesskammerbodens 4d und das Baufeld 8 von oben gezeigt.

Die Leitelemente 306, 307 können beispielsweise als formstabile Feinbleche ausgebildet sein. Sie weisen jeweils eine Höhenerstreckung in z-Richtung auf (in Fig. 6 nicht gezeigt), die vorzugsweise mindestens der ersten Höhe h₁ entspricht, bis zu der sich der untere Höhenbereich der Prozesskammer erstreckt (vgl. Fig. 1), z. B. das Anderthalbfache der ersten Höhe h₁. In eine zweite Richtung senkrecht zur Höhenerstreckung erstrecken sich die Leitelemente 306, 307 jeweils von einem ersten Ende 306a bzw. 307a zu einem zweiten Ende 306b bzw. 307b über eine Länge R, die vorzugsweise mindestens der Länge N des Baufelds (vgl. Fig. 3a) entspricht. In die dritte Richtung senkrecht zur zweiten Richtung und zur Höhenerstreckung weisen die Leitelemente 306, 307 jeweils eine Dicke auf, die um ein Mehrfaches kleiner ist als die Höhenerstreckung und die Länge R, weshalb jedes der Leitelemente 306, 307 in der Draufsicht von oben in Fig. 6 als eine Linie dargestellt ist. Somit weist jedes der Leitelemente 306, 307 im Wesentlichen zwei ebene, d. h. plane, und paarweise zueinander parallele Leitflächen 311, 311' bzw. 312, 312' auf. Die Leitflächen 311, 312 sind jeweils an der der Hauptströmung 30 zugewandten Seite des Leitelements 306 bzw. 307 vorgesehen. Die Leitflächen 311', 312' sind jeweils an den der Hauptströmung 30 abgewandten Seiten des Leitelements 306 bzw. 307 angeordnet.

Die Leitelemente 306, 307 sind dabei in dem Bereich der Oberfläche 18 des Prozesskammerbodens 4d, d. h. außerhalb des Baufelds 8, in der Vorrichtung 1 angeordnet. Die Leitelemente 306, 307 sind vorzugsweise, wie in Fig. 6 gezeigt, von dem Gaseinlass 32 beabstandet vorgesehen, d. h. sie grenzen nicht unmittelbar an den Gaseinlass 32 an. Damit liegt ihr jeweils erstes Ende 306a, 307a in einem Abstand größer als 0 zu dem Gaseinlass 32, beispielsweise in einem Abstand von 5 cm, 10 cm oder 20 cm, Das zweite Ende 306b, 307b der Leitelemente 306, 307 ist jeweils weiter von dem Gaseinlass 32 beabstandet als das erste Ende 306a, 307a. Die Leitflächen 311, 312 der Leitelemente 306, 307 erstrecken sich jeweils parallel zur Hauptströmungsrichtung der Hauptströmung 30. Sie sind auf gegenüberliegenden Seiten des Baufelds 8 angeordnet, so dass sie das Baufeld 8 zumindest abschnittsweise flankieren bzw. zumindest abschnittsweise einen Strömungskanal für die Hauptströmung 30 bilden, welcher in z-Richtung nach oben hin offen ist und nach unten durch die Oberfläche 18 des Prozesskammerbodens 4d bzw. das Baufeld 8 begrenzt ist. Der durch die Leitelemente 306, 307 und das Baufeld 8 gebildete Strömungskanal ist zumindest während des selektiven Verfestigens des Aufbaumaterials stationär, d. h. ortsfest.

Insbesondere die der Hauptströmung 30 zugewandten Leitflächen 311, 312 sorgen für eine Führung der Hauptströmung 30, d. h. sie verhindern ein Ausbreiten und/oder Ausweichen der Hauptströmung in y-Richtung. Insbesondere die der Hauptströmung 30 abgewandten Leitflächen 311', 312' sorgen für eine Abschirmung der Hauptströmung 30 vor der Stör- bzw. Nebenströmung 37, d. h. die Leitflächen 311', 312' halten die Stör- bzw. Nebenströmung zumindest abschnittsweise bzw. über die Länge ihrer Erstreckung von der Hauptströmung 30 ab. Somit bilden die Leitelemente 306, 307 eine Grenzzone gemäß vorliegender Erfindung.

Der in Fig. 6 schematisch gezeigte Gaseinlass kann beispielsweise als Lochblech gemäß Fig. 2 oder als Düsenelement gemäß Fig. 4 ausgebildet sein bzw. ein derartiges Lochblech oder Düsenelement umfassen. Dabei kann vorzugsweise das Lochblech ohne die Leitgaseinlassöffnungen 121 und die Leitelemente 102a, 102b, 103a, 103b bereitgestellt sein, welche die Leitgaseinlassöffnungen 121 abschnittsweise umschließen. Alternativ oder zusätzlich kann das Düsenelement ohne die Leitgaseinlasskanäle 221, 221' und ohne die Leitelemente 204, 205 bereitgestellt sein.

Die Merkmale der oben beschriebenen drei Ausführungsformen der vorliegenden Erfindung können auch untereinander kombiniert werden. Beispielsweise kann auf einer ersten Seite des Baufelds ein Leitgasstrom 35 bzw. 36 bereitgestellt sein und auf einer der ersten Seite gegenüberliegenden zweiten Seite des Baufelds ein Leitelement 306 bzw. 307.

In den Figuren 3a, 3b, 5 und 6 ist ein rechteckiges Baufeld gezeigt, wobei die Länge L₁ des Lochblechs 132 bzw. des Düsenelements 232, allgemein die Länge L₁ des Gaseinlasses 32 in y-Richtung, über welche der Hauptgasstrom 30 in die Prozesskammer 3 eingeleitet wird, vorzugsweise an die Breite M des Baufelds 8, d. h. eine Erstreckung des Baufelds in y-Richtung, angepasst ist (vgl. Fig. 3a). Das Baufeld 8 kann auch von einer rechteckigen Form abweichen, beispielsweise kann das Baufeld eine runde Form aufweisen. In diesem Fall kann die Länge L₁ des Gaseinlasses 32 an einen Durchmesser des Baufelds 8 angepasst sein. Dabei ist die Länge L₁ des Gaseinlasses 32 vorzugsweise größer als die entsprechende Erstreckung des Baufelds 8, insbesondere mindestens 110%, weiter bevorzugt mindestens 120% dieser Erstreckung.

Gemäß einer Weiterbildung der Erfindung ist zumindest eines der Leitelemente 101a, 101 b, 102a, 102b, 103a, 103b, 204, 205, 306, 307 nicht ortsfest in der Prozesskammer 3 vorgesehen, sondern bewegbar in der Prozesskammer 3 vorgesehen. Die Leitelemente 101a, 101b, 102a, 102b, 103a, 103b, 204, 205, 306, 307 können beispielsweise verfahrbar und/oder klappbar und/oder schwenkbar in der Prozesskammer 3 bzw. an dem Lochblech 132 bzw. dem Düsenelement 232 vorgesehen sein. Beispielsweise können die mit Bezug auf Fig. 6 beschriebenen Leitelemente 306, 307 aus dem Prozesskammerboden 4d verschwenkbar oder verschiebbar ausgebildet sein, so dass sie eine Überfahrt des Beschichters 16 nicht behindern können bzw. ein Ausweichen der Leitelemente 306, 307 z. B. über eine mechanische oder elektronische Koppelung mit der Bewegung des Beschichters 16 koordiniert ist. Auch kann zumindest das beschichternahe Leitelement 306 an dem Beschichter 16 vorgesehen sein und durch Verfahren des Beschichters 16 in eine Wirkposition (s. u.) gebracht werden. Als verschwenkbare Leitelemente können insbesondere die an dem Lochblech 132 bzw. dem Düsenelement 232 angebrachten Leitelemente 101a, 101b, 102a, 102b, 103a, 103b, 204, 205 ausgebildet sein, beispielsweise indem sie mittels eines Scharniers an dem Lochblech bzw. dem Düsenelement angebracht sind.

in den Figuren 3a, 3b, 5 und 6 ist der Beschichter 16 jeweils in einer Ruheposition gezeigt, welche in der Darstellung der Figuren jeweils oberhalb des Baufelds8 dargestellt ist. Eine Ruheposition des Beschichters 16 kann auch auf der gegenüberliegenden (in der Darstellung der Figuren unteren) Seite des Baufelds 8 liegen. Vorzugsweise nimmt der Beschichter 16 jeweils nach einer Beschichterfahrt die jeweils andere Ruheposition ein, d. h. er verfährt für einen Beschichtungsvorgang jeweils einmal über das Baufeld 8 und wird dann neben der gegenüberliegenden Seite des Baufelds in seiner Ruheposition außerhalb des Baufelds positioniert, bis er bei einer darauffolgenden Beschichtungsbewegung wieder über das Baufeld 8 verfährt und seine Ausgangsposition einnimmt. Die Beströmung der Prozesskammer ist vorzugsweise an diese wechselseitige Positionierung des Beschichters angepasst, beispielsweise durch eine entsprechende Steuerung der Leitgasströme 35, 36 und/oder indem der Gaseinlass symmetrisch ausgebildet ist (vgl. das in Fig. 2 und 3a gezeigte Lochblech 132 und die daraus resultierenden annähernd symmetrisch ausströmenden Leitgasströme 35, 36 in Fig. 3b).

In den Figuren 1 bis 6 sind die dinglichen Leitelemente jeweils in einer Wirkposition dargestellt, in der sie wie oben beschrieben dazu geeignet sind, einen in der Prozesskammer 3 erzeugten gerichteten oder ungerichteten Gasstrom zumindest abschnittsweise zu führen und somit als eine Grenzzone gemäß vorliegender Erfindung zu wirken. Werden die Leitelemente hingegen verfahren bzw. weggeklappt bzw. verschwenkt und so aus der Wirkposition in eine von der Wirkposition verschiedene Ruheposition gebracht, so sind sie vorzugsweise nicht zum Leiten eines Gasstroms geeignet, d. h. dienen nicht als Grenzzone.

Erfindungsgemäß werden die Leitelemente daher zumindest während des selektiven Verfestigens des Aufbaumaterials in der Wirkposition positioniert, so dass sie zumindest während des selektiven Verfestigens des Aufbaumaterials als Grenzzone dienen. Aufgrund des üblichen Aufeinanderfolgens bzw. Abwechselns der Prozessschritte des selektiven Verfestigens und des Beschichtens mit einer Schicht des Aufbaumaterials sind die Leitelemente typischerweise im Intervall zwischen zwei Beschichtungsvorgängen, z. B. während des selektiven Verfestigens einer einzigen Schicht, in ihrer jeweiligen Wirkposition. Falls die Wirkposition bzw. Ruheposition einzelner Leitelemente nicht zwingend mit dem bewegbaren Beschichter koordiniert werden muss, ist auch denkbar, dass in diesen Fällen diese einzelnen Leitelemente ihre Wirkposition während des selektiven Verfestigens einer Mehrzahl von Schichten, einer Gesamtheit der Schichten eines oder mehrerer Bauteile oder einer Gesamtheit der Schichten eines gesamten Bauvorgangs einnehmen. Damit kann eine Zahl von Verstellvorgängen reduziert werden.

An Stelle der oder zusätzlich zu den oben beschriebenen Maßnahmen zum Erzeugen bzw. Positionieren einer Grenzzone, welche die Hauptströmung 30 zumindest abschnittsweise gegenüber der Stör- bzw. Nebenströmung 37 abtrennt bzw. begrenzt, also eine räumliche Trennung der Strömungen bewirkt, kann die Stör- bzw. Nebenströmung 37 (s, Fig. 3b, 5, 6) auch gesteuert und zumindest abschnittsweise modifiziert werden und/oder gesteuert und zumindest abschnittsweise verdrängt werden. Unter einem Modifizieren der Nebenströmung wird das Modifizieren ihrer Strömungseigenschaften verstanden, insbesondere ihrer Strömungsrichtung und/oder ihrer Strömungsgeschwindigkeit und/oder ihres Volumenstroms.

Eine erste Maßnahme zum Modifizieren der Stör- bzw. Nebenströmung stellt das oben beschriebene Erzeugen eines Leitgasstroms 35, 36 dar. Alternativ oder zusätzlich zu dem Leitgasstrom kann in der Prozesskammer 3 ein zusätzlicher Nebengasauslass vorgesehen sein, welcher innerhalb des unteren Höhenbereichs der Prozesskammer 3 von der Arbeitsebene 7 bis zur ersten Höhe h₁ (vgl. Fig. 1) vorgesehen ist und in dem Bereich oberhalb der Oberfläche 18 des Prozesskammerbodens 4d, d. h. außerhalb des Baufelds 8, angeordnet ist. Die Nebenströmung wird dabei zumindest teilweise durch den Nebengasauslass ausgeleitet, so dass diese die Hauptströmung 30 nicht bzw. nur geringfügig beeinflussen kann.

Auch kann eine weitere Gasströmung in die Prozesskammer eingeleitet werden, beispielsweise durch einen weiteren Nebengaseinlass, welche die Prozesskammer innerhalb des unteren Höhenbereichs der Prozesskammer 3 von der Arbeitsebene 7 bis zur ersten Höhe h₁ (vgl. Fig. 1) und in dem Bereich oberhalb der Oberfläche 18 des Prozesskammerbodens 4d, d. h. außerhalb des Baufelds 8, zumindest abschnittsweise durchströmt. Die weitere Gasströmung wird dabei so in die Prozesskammer eingeleitet, dass sie der Nebenströmung zumindest abschnittsweise entgegengerichtet ist und/oder in einem Winkel auf die Nebenströmung auftrifft und/oder eine größere Strömungsgeschwindigkeit und/oder einen größeren Volumenstrom aufweist als die Nebenströmung.

Vorzugsweise werden die Hauptströmung 30 und die Nebenströmung 37 vorab unter Verwendung eines Computerprogramms simuliert und darauf basierend geeignete Maßnahmen zum Verbessern der Strömungseigenschaften, insbesondere der Homogenität der Hauptströmung, ermittelt, d. h. eine für die jeweiligen Rahmenbedingungen geeignete Grenzzone ermittelt. Derartige Rahmenbedingungen sind beispielsweise vorrichtungsspezifische Randbedingungen wie z. B. die Größe und/oder Anordnung des Baufelds in der Prozesskammer, sowie prozessspezifische Rahmenbedingungen, wie z. B. die Art des verwendeten Aufbaumaterials, Verfestigungsparameter, unter denen die selektive Verfestigung des Aufbaumaterials erfolgt, etc. Dies kann beispielsweise durch die Steuereinheit selbst implementiert werden, oder durch einen separat von der Vorrichtung bereitgestellten Rechner, Vorzugsweise ist das Computerprogramm zum Ermitteln einer geeigneten Grenzzone dazu geeignet, einen Algorithmus zum Implementieren maschinellen Lernens zu implementieren, d. h. es ist vorzugsweise ein "selbstlernender" Algorithmus bereitgestellt. Alternativ oder zusätzlich ist der Algorithmus dazu geeignet, eine geeignete Grenzzone iterativ zu ermitteln, d. h. die Grenzzone schrittweise unter dem Gesichtspunkt, die Strömungseigenschaften der Hauptströmung zu verbessern, anzupassen.

Auch wenn die vorliegende Erfindung anhand einer Lasersinter- bzw. Laserschmelzvorrichtung beschrieben wurde, ist sie nicht auf das Lasersintern oder Laserschmelzen eingeschränkt. Sie kann auf beliebige Verfahren zum generativen Herstellen eines dreidimensionalen Objektes durch schichtweises Aufbringen und selektives Verfestigen eines Aufbaumaterials angewendet werden.

Der Belichter kann beispielsweise einen oder mehrere Gas- oder Festkörperlaser oder jede andere Art von Laser wie z.B. Laserdioden, insbesondere VCSEL (Vertical Cavity Surface Emitting Laser) oder VECSEL (Vertical External Cavity Surface Emitting Laser), oder eine Zeile dieser Laser umfassen. Allgemein kann als Belichter jede Einrichtung verwendet werden, mit der Energie als Wellen- oder Teilchenstrahlung selektiv auf eine Schicht des Aufbaumaterials aufgebracht werden kann. Anstelle eines Lasers können beispielsweise eine andere Lichtquelle, ein Elektronenstrahl oder jede andere Energie- bzw. Strahlenquelle verwendet werden, die geeignet ist, das Aufbaumaterial zu verfestigen. Statt des Ablenkens eines Strahls kann auch das Belichten mit einem verfahrbaren Zeilenbelichter angewendet werden. Auch auf das selektive Maskensintern, bei dem eine ausgedehnte Lichtquelle und eine Maske verwendet werden, oder auf das High-Speed-Sintern (HSS), bei dem auf dem Aufbaumaterial selektiv ein Material aufgebracht wird, das die Strahlungsabsorption an den entsprechenden Stellen erhöht (Absorptionssintern) oder verringert (Inhibitionssintern), und dann unselektiv großflächig oder mit einem verfahrbaren Zeilenbelichter belichtet wird, kann die Erfindung angewendet werden.

Anstelle des Einbringens von Energie kann das selektive Verfestigen des aufgetragenen Aufbaumaterials auch durch 3D-Drucken erfolgen, beispielsweise durch Aufbringen eines Klebers. Allgemein bezieht sich die Erfindung auf das generative Herstellen eines Objekts mittels schichtweisen Auftragens und selektiven Verfestigens eines Aufbaumaterials unabhängig von der Art und Weise, in der das Aufbaumaterial verfestigt wird.

## Patentansprüche

1. Verfahren zum Beströmen einer Prozesskammer (3) einer Vorrichtung (1) zum Herstellen eines dreidimensionalen Objekts (2) durch schichtweises Aufbringen und selektives Verfestigen eines Aufbaumaterials in einem Baufeld (8), wobei bei dem Verfahren die Prozesskammer (3) mit einem Prozessgas in einem unteren Höhenbereich (h₁) der Prozesskammer (3) beströmt wird,
wobei die Prozesskammer (3) einen Gaseinlass (32, 132, 232) zum Einlassen des Prozessgases in die Prozesskammer (3) und einen Gasauslass (34) zum Auslassen des Prozessgases aus der Prozesskammer (3) umfasst, wobei der Gaseinlass (32) und der Gasauslass (34) in dem unteren Höhenbereich (h₁) der Prozesskammer (3) vorgesehen sind und das Prozessgas in einer Hauptströmung (30) von dem Gaseinlass (32) zu dem Gasauslass (34) strömt,
und wobei eine Nebenströmung (37) in einem Teilbereich des unteren Höhenbereichs, der oberhalb einer das Baufeld (8) umgebenden Bodenfläche der Prozesskammer (3) liegt, lokalisiert ist,
wobei bei dem Verfahren eine Grenzzone zumindest abschnittsweise zwischen der Nebenströmung (37) und der Hauptströmung (30) zumindest während des selektiven Verfestigens zumindest einer Schicht des Aufbaumaterials im Wesentlichen in dem Teilbereich des unteren Höhenbereichs, der oberhalb der das Baufeld (8) umgebenden Bodenfläche liegt, positioniert wird, aufgrund von mindestens einer der folgenden Beeinflussungsmaßnahmen:
Beeinflussungsmaßnahme I: Positionieren zumindest eines Leitelements (101a, 101b, 102a, 102b, 103a, 103b, 204, 205, 306, 307) als Grenzzone in der Prozesskammer (3), wobei das zumindest eine Leitelement zumindest eine Leitfläche (111, 112, 113, 113', 212, 212', 312, 312') zur zumindest abschnittsweisen Führung der Hauptströmung (30) und/oder der Nebenströmung (37) aufweist;
Beeinflussungsmaßnahme II:
Gesteuertes, zumindest abschnittsweises Modifizieren der Strömungseigenschaften der Nebenströmung (37), insbesondere in ihrer Richtung und/oder Geschwindigkeit und/oder ihrem Volumenstrom, durch Einleiten zumindest eines Leitgasstroms (35, 36) in die Prozesskammer (3), wobei der zumindest eine Leitgasstrom (35, 36) den Teilbereich des unteren Höhenbereichs, der oberhalb der das Baufeld (8) umgebenden Bodenfläche liegt, zumindest abschnittsweise durchströmt und der Leitgasstrom so ausgebildet ist, dass er die Hauptströmung flankiert und dabei mit der Nebenströmung in Wechselwirkung steht, und/oder
gesteuertes, zumindest abschnittsweises Modifizieren der Strömungseigenschaften der Nebenströmung (37), insbesondere in ihrer Richtung und/oder Geschwindigkeit und/oder ihrem Volumenstrom, wobei weiter ein Nebengasauslass in der Prozesskammer (3) in dem Teilbereich des unteren Höhenbereichs, der oberhalb einer das Baufeld (8) umgebenden Bodenfläche der Prozesskammer liegt, bereitgestellt wird und die Nebenströmung (37) zumindest teilweise durch den Nebengasauslass aus der Prozesskammer ausgeleitet wird.

2. Verfahren nach Anspruch 1, wobei eine maximale horizontale Erstreckung des Gaseinlasses (32, 132, 232) und/oder des Gasauslasses (34) mindestens 80%, vorzugsweise mindestens 100%, besonders bevorzugt mindestens 120% einer Erstreckung des Baufelds (8) entspricht, insbesondere einer Länge (M) einer angrenzenden Baufeldseite eines rechteckigen Baufelds (8) und/oder einer längsten Baufelddiagonale eines polygonalen Baufelds und/oder eines Baufelddurchmessers eines kreisförmigen Baufelds.

3. Verfahren nach Anspruch 1 oder 2 unter Verwendung der Beeinflussungsmaßnahme I,
wobei das zumindest eine Leitelement (101a, 101b, 102a, 102b, 103a, 103b, 204, 205) ein erstes Ende (115, 215) aufweist, welches zumindest während des selektiven Verfestigens zumindest einer Schicht des Aufbaumaterials an dem Gaseinlass (32, 132, 232) positioniert wird, vorzugsweise wobei das erste Ende (115, 215) des Leitelements spaltfrei an dem Gaseinlass positioniert wird.

4. Verfahren nach Anspruch 3, wobei das erste Ende (115, 215) eine vertikale Abmessung aufweist, die größer oder gleich einer vertikalen Erstreckung (h₁) der Öffnung des Gaseinlasses ist und/oder
wobei das Leitelement (101a, 101b, 102a, 102b, 103a, 103b, 204, 205) derart positioniert wird, dass in einer Orthogonalprojektion des Gaseinlasses und des Leitelements auf die Ebene des Baufelds (8) die Öffnung des Gaseinlasses in einer ersten Distanz (d₁) zum Baufeld (8) angeordnet ist und ein zweites Ende des Leitelements in einer zweiten Distanz (d₂) zum Baufeld angeordnet ist, wobei die zweite Distanz (d₂) kleiner ist als die erste Distanz (d₁),
wobei die zweite Distanz (d₂) vorzugsweise um mindestens 1 cm, weiter bevorzugt um mindestens 5 cm, besonders bevorzugt um mindestens 10 cm kleiner ist als die erste Distanz (d₁).

5. Verfahren nach Anspruch 3 oder 4, wobei das Leitelement (101a, 101b, 205) derart positioniert wird, dass in einer Orthogonalprojektion des Gaseinlasses auf die Ebene des Baufelds (8) die Leitfläche des zumindest einen Leitelements im Wesentlichen senkrecht zu einer Ebene der Gaseinlassöffnung gerichtet ist oder
wobei das Leitelement (102a, 102b, 103a, 103b, 204) derart positioniert wird, dass in einer Orthogonalprojektion des Gaseinlasses auf die Ebene des Baufelds (8) die Leitfläche des zumindest einen Leitelements in einem Winkel (α) größer als 0° zu einer Senkrechten (S) auf eine Ebene der Gaseinlassöffnung gerichtet ist,
wobei vorzugsweise die Leitfläche und die Erstreckungsrichtung der Einlasskanäle einen Winkel (α) von mindestens 3°, weiter bevorzugt mindestens 5°, noch weiter bevorzugt mindestens 10° und/oder von höchstens 30°, weiter bevorzugt höchstens 20°, besonders bevorzugt höchstens 15° einschließen.

6. Verfahren nach einem der Ansprüche 3 bis 5, wobei zumindest zwei Leitelemente (101a, 101b, 102a, 102b, 103a, 103b, 204, 205) in der Prozesskammer (3) positioniert werden und wobei ein erstes der Leitelemente an einem ersten Ende des Gaseinlasses positioniert wird und ein zweites der Leitelemente an einem zweiten Ende des Gaseinlasses positioniert wird.

7. Verfahren nach einem der Ansprüche 1 bis 6 unter Verwendung der Beeinflussungsmaßnahme I,
wobei das zumindest eine Leitelement (306, 307) beabstandet von dem Gaseinlass (32, 132, 232) in der Prozesskammer (3) positioniert wird.

8. Verfahren nach Anspruch 7, wobei das zumindest eine Leitelement (306, 307) derart positioniert wird, dass in einer Orthogonalprojektion des Gaseinlasses auf die Ebene des Baufelds (8) die Leitfläche (311, 311', 312, 312') des Leitelements (306, 307) im Wesentlichen senkrecht zu einer Ebene der Gaseinlassöffnung, gerichtet ist, oder in einem Winkel von höchstens 30°, vorzugsweise von höchstens 20°, weiter bevorzugt von höchstens 10°, besonders bevorzugt von höchstens 5° zu einer Senkrechten (S) auf eine Ebene der Gaseinlassöffnung, gerichtet ist und/oder
wobei zumindest zwei Leitelemente (306, 307) derart in der Prozesskammer (3) positioniert werden, dass in einer Orthogonalprojektion der Leitelemente auf die Ebene des Baufelds (8) die Leitelemente die parallel zueinander angeordneten Seiten eines im Wesentlichen rechteckigen Baufelds (8) flankieren.

9. Verfahren nach einem der Ansprüche 3 bis 8, wobei das zumindest eine Leitelement (101a, 101b, 102a, 102b, 103a, 103b, 204, 205) derart ausgebildet und/oder in der Prozesskammer (3) positioniert ist, dass es bewegbar in der Prozesskammer (3) vorgesehen ist, insbesondere verfahrbar und/oder verschwenkbar in der Prozesskammer vorgesehen ist.

10. Verfahren nach einem der Ansprüche 1 bis 9 unter Durchführung der Beeinflussungsmaßnahme II,
wobei der Leitgasstrom (35, 36) zumindest abschnittsweise, insbesondere unmittelbar nach einem Eintreten in die Prozesskammer (3), eine um mindestens 20% höhere maximale Geschwindigkeit und/oder einen um mindestens 20% höheren Volumenstrom pro durchströmtem Volumenelement aufweist als die Hauptströmung (30) und/oder
wobei der Leitgasstrom (35, 36) in einem Winkel (α) größer als 0° von der Richtung der Hauptströmung (30) weg eingeleitet wird, weiter bevorzugt in einem Winkel von mindestens 1°, noch weiter bevorzugt von mindestens 3°, noch weiter bevorzugt von mindestens 5° und/oder von höchstens 30°, noch weiter bevorzugt von höchstens 20°, noch weiter bevorzugt von höchstens 15°.

11. Verfahren nach einem der Ansprüche 1 bis 10, wobei eine Grenzzone zumindest abschnittsweise zwischen der Nebenströmung (37) und der Hauptströmung (30) zumindest während des selektiven Verfestigens zumindest einer Schicht des Aufbaumaterials im Wesentlichen in dem Teilbereich des unteren Höhenbereichs, der oberhalb der das Baufeld (8) umgebenden Bodenfläche liegt, positioniert wird, aufgrund einer Beeinflussungsmaßnahme III: Gesteuertes, zumindest abschnittsweises Verdrängen der Nebenströmung (37), indem in der Prozesskammer eine weitere Gasströmung in dem Teilbereich des unteren Höhenbereichs, der oberhalb der das Baufeld umgebenden Bodenfläche liegt, eingeleitet wird.

12. Verfahren nach Anspruch 11, wobei die weitere Gasströmung der Nebenströmung (37) zumindest abschnittsweise entgegengerichtet ist und/oder schräg auf die Nebenströmung (37) auftrifft und/oder eine größere Strömungsgeschwindigkeit und/oder einen größeren Volumenstrom aufweist als die Nebenströmung.

13. Verfahren zum Herstellen eines dreidimensionalen Objekts (2) in einer Vorrichtung (1) zum Herstellen eines dreidimensionalen Objekts (2) durch schichtweises Aufbringen und selektives Verfestigen eines Aufbaumaterials in einem Baufeld (8), wobei zumindest während des selektiven Verfestigens zumindest einer Schicht des Aufbaumaterials ein Verfahren gemäß einem der Ansprüche 1 bis 12 durchgeführt wird.

14. Vorrichtung zum Herstellen eines dreidimensionalen Objekts (2) durch schichtweises Aufbringen und selektives Verfestigen eines Aufbaumaterials in einem Baufeld (8) in einer Prozesskammer (3),
wobei die Prozesskammer einen Gaseinlass (32, 132, 232) zum Einlassen eines Prozessgases in die Prozesskammer (3) und einen Gasauslass (34) zum Auslassen des Prozessgases aus der Prozesskammer umfasst, wobei der Gaseinlass und der Gasauslass in einem unteren Höhenbereich (h₁) der Prozesskammer vorgesehen sind,
und die Vorrichtung (1) eine Beströmungsvorrichtung zum Beströmen der Prozesskammer (3) mit einem Prozessgas in dem unteren Höhenbereich (h₁) umfasst,
wobei die Beströmungsvorrichtung eine Gasfördervorrichtung zum Erzeugen zumindest eines Gasstroms (30, 35, 36) in der Prozesskammer (3) umfasst und das Prozessgas im Betrieb der Beströmungsvorrichtung in einer Hauptströmung (30) von dem Gaseinlass zu dem Gasauslass strömt,
und wobei im Betrieb der Beströmungsvorrichtung eine Nebenströmung (37) in einem Teilbereich des unteren Höhenbereichs, der oberhalb einer das Baufeld (8) umgebenden Bodenfläche der Prozesskammer (3) liegt, lokalisiert ist,
wobei eine Grenzzone zumindest abschnittsweise zwischen der Nebenströmung (37) und der Hauptströmung (30) zumindest während des selektiven Verfestigens zumindest einer Schicht des Aufbaumaterials im Wesentlichen in dem Teilbereich des unteren Höhenbereichs, der oberhalb der das Baufeld (8) umgebenden Bodenfläche liegt, vorgesehen ist, wobei die Beströmungsvorrichtung zu diesem Zweck mindestens eines der folgenden Mittel umfasst:
- Mittel zu einem Positionieren zumindest eines Leitelements (101a, 101b, 102a, 102b, 103a, 103b, 204, 205, 306, 307) als Grenzzone in der Prozesskammer, wobei das zumindest eine Leitelement zumindest eine Leitfläche (111, 112, 113, 113', 212, 212', 312, 312') zur zumindest abschnittsweisen Führung der Hauptströmung (30) und/oder der Nebenströmung (37) aufweist;
- Mittel zu einem gesteuerten zumindest abschnittsweisen Modifizieren der Strömungseigenschaften der Nebenströmung (37), insbesondere in ihrer Richtung und/oder Geschwindigkeit und/oder ihrem Volumenstrom, durch Einleiten zumindest eines Leitgasstroms (35, 36) in die Prozesskammer (3), wobei der zumindest eine Leitgasstrom (35, 36) den Teilbereich des unteren Höhenbereichs, der oberhalb der das Baufeld (8) umgebenden Bodenfläche liegt, zumindest abschnittsweise durchströmt und der Leitgasstrom so ausgebildet ist, dass er die Hauptströmung flankiert und dabei mit der Nebenströmung in Wechselwirkung steht, und/oder
- Bereitstellen eines Nebengasauslass in der Prozesskammer (3) in dem Teilbereich des unteren Höhenbereichs, der oberhalb einer das Baufeld (8) umgebenden Bodenfläche der Prozesskammer liegt, wobei die Nebenströmung (37) zumindest teilweise durch den Nebengasauslass aus der Prozesskammer ausgeleitet wird.

## Claims

1. A method of providing a flow for a process chamber (3) of a device (1) for producing a three-dimensional object (2) by layer-wise application and selective solidification of a building material in a build area (8), in which method a process gas is supplied to the process chamber (3) in a lower altitude region (h₁) of the process chamber (3),
wherein the process chamber (3) comprises a gas inlet (32, 132, 232) for introducing the process gas into the process chamber (3) and a gas outlet (34) for discharging the process gas from the process chamber (3), wherein the gas inlet (32) and the gas outlet (34) are provided in the lower altitude region (h₁) of the process chamber (3) and the process gas flows in a main flow (30) from the gas inlet (32) to the gas outlet (34),
and wherein a secondary flow (37) is located in a sub-region of the lower altitude region, which sub-region is located above a bottom surface of the process chamber (3) surrounding the build area (8),
wherein in the method a boundary zone is positioned at least in a section between the secondary flow (37) and the main flow (30) at least during the selective solidification of at least one layer of the building material and substantially in that sub-region of the lower altitude region that is located above the bottom surface surrounding the build area (8), due to at least one of the following influencing measures:
influencing measure I: positioning at least one guide element (101a, 101b, 102a, 102b, 103a, 103b, 204, 205, 306, 307) as a boundary zone in the process chamber (3), wherein the at least one guide element has at least one guide face (111, 112, 113, 113', 212, 212', 312, 312') for guiding the main flow (30) and/or the secondary flow (37) at least in a section;
influencing measure II:
modifying the flow properties of the secondary flow (37) in a controlled manner and at least in a section thereof, in particular in its direction and/or velocity and/or its volumetric flow rate, by introducing at least one guide gas flow (35, 36) into the process chamber (3), wherein at least a section of the at least one guide gas flow (35, 36) flows through the sub-region of the lower altitude region that is located above the bottom surface surrounding the build area (8) and the guide gas flow is configured such that it flanks the main flow and interacts with the secondary flow, and/or
modifying the flow properties of the secondary flow (37) in a controlled manner and at least in a section thereof, in particular in its direction and/or velocity and/or its volumetric flow rate, wherein furthermore a secondary gas outlet is provided in the process chamber (3) in the sub-region of the lower altitude region that is located above a bottom surface of the process chamber surrounding the build area (8) and the secondary flow (37) is at least partially discharged from the process chamber through the secondary gas outlet.

2. The method of claim 1, wherein a maximum horizontal extent of the gas inlet (32, 132, 232) and/or of the gas outlet (34) corresponds to at least 80%, preferably at least 100%, particularly preferably at least 120% of an extent of the build area (8), in particular of a length (M) of an adjacent build area side of a rectangular build area (8) and/or of a longest build area diagonal of a polygonal build area and/or of a build area diameter of a circular build area.

3. The method of claim 1 or 2 using the influencing measure I,
wherein the at least one guide element (101a, 101b, 102a, 102b, 103a, 103b, 204, 205) comprises a first end (115, 215) that is positioned at the gas inlet (32, 132, 232) at least during the selective solidification of at least one layer of the building material, preferably wherein the first end (115, 215) of the guide element is positioned at the gas inlet in a gap-free manner.

4. The method of claim 3, wherein the first end (115, 215) has a vertical dimension which is larger than or equal to a vertical extent (h₁) of the opening of the gas inlet and/or
wherein the guide element (101a, 101b, 102a, 102b, 103a, 103b, 204, 205) is positioned such that in an orthogonal projection of the gas inlet and the guide element onto the plane of the build area (8), the opening of the gas inlet is arranged at a first distance (d₁) from the build area (8) and a second end of the guide element is arranged at a second distance (d₂) from the build area, wherein the second distance (d₂) is smaller than the first distance (d₁),
wherein the second distance (d₂) is preferably at least 1 cm, more preferably at least 5 cm, particularly preferably at least 10 cm smaller than the first distance (d₁).

5. The method of claim 3 or 4, wherein the guide element (101a, 101b, 205) is positioned such that in an orthogonal projection of the gas inlet onto the plane of the build area (8), the guide face of the at least one guide element is oriented substantially perpendicular to a plane of the gas inlet opening, or
wherein the guide element (102a, 102b, 103a, 103b, 204) is positioned such that in an orthogonal projection of the gas inlet onto the plane of the build area (8), the guide face of the at least one guide element is oriented at an angle (α) larger than 0° to a perpendicular (S) to a plane of the gas inlet opening,
wherein preferably the guide face and the extension direction of the inlet channels form an angle (α) of at least 3°, more preferably at least 5°, even more preferably at least 10° and/or of 30° at most, more preferably 20° at most, particularly preferably 15° at most.

6. The method of one of claims 3 to 5, wherein at least two guide elements (101a, 101b, 102a, 102b, 103a, 103b, 204, 205) are positioned in the process chamber (3) and wherein a first one of the guide elements is positioned at a first end of the gas inlet and a second one of the guide elements is positioned at a second end of the gas inlet.

7. The method of one of claims 1 to 6 using the influencing measure I,
wherein the at least one guide element (306, 307) is positioned in the process chamber (3) at a distance from the gas inlet (32, 132, 232).

8. The method of claim 7, wherein the at least one guide element (306, 307) is positioned such that in an orthogonal projection of the gas inlet onto the plane of the build area (8), the guide face (311, 311', 312, 312') of the guide element (306, 307) is oriented substantially perpendicular to a plane of the gas inlet opening or is oriented at an angle of 30° at most, preferably of 20° at most, more preferably of 10° at most, particularly preferably of 5° at most to a perpendicular (S) to a plane of the gas inlet opening and/or
wherein at least two guide elements (306, 307) are positioned in the process chamber (3) such that in an orthogonal projection of the guide elements onto the plane of the build area (8), the guide elements flank the sides of a substantially rectangular build area (8), which sides are arranged mutually parallel.

9. The method of one of claims 3 to 8, wherein the at least one guide element (101a, 101b, 102a, 102b, 103a, 103b, 204, 205) is configured and/or positioned in the process chamber (3) such that it is movably provided in the process chamber (3), in particular displaceable and/or pivotably provided in the process chamber.

10. The method of one of claims 1 to 9 implementing the influencing measure II,
wherein the guide gas flow (35, 36) has at least in a section thereof, in particular directly after entering the process chamber (3), a maximum velocity which is at least 20% larger and/or a volumetric flow rate per volume element which is at least 20% larger than the main flow (30), and/or
wherein the guide gas flow (35, 36) is introduced at an angle (α) larger than 0° away from the direction of the main flow (30), preferably at an angle of at least 1°, more preferably of at least 3°, even more preferably of at least 5° and/or of 30° at most, more preferably of 20° at most, even more preferably of 15° at most.

11. The method of one of claims 1 to 10, wherein a boundary zone is positioned at least in a section between the secondary flow (37) and the main flow (30) at least during the selective solidification of at least one layer of the building material and substantially in that sub-region of the lower altitude region that is located above the bottom surface surrounding the build area (8), due to an influencing measure III: displacing, in a controlled manner, the secondary flow (37) at least in a section thereof, by introducing a further gas flow into the process chamber within the sub-region of the lower altitude region that is located above the bottom surface surrounding the build area.

12. The method of claim 11, wherein the further gas flow is at least partially directed in an opposite direction to the secondary flow (37) and/or obliquely arrives at the secondary flow (37) and/or has a larger flow velocity and/or a larger volumetric flow rate than the secondary flow.

13. A method of producing a three-dimensional object (2) in a device (1) for producing a three-dimensional object (2) by layer-wise application and selective solidification of a building material in a build area (8), wherein at least during the selective solidification of at least one layer of the building material a method of one of claims 1 to 12 is carried out.

14. A device for producing a three-dimensional object (2) by layer-wise application and selective solidification of a building material in a build area (8) in a process chamber (3),
wherein the process chamber comprises a gas inlet (32, 132, 232) for introducing a process gas into the process chamber (3) and a gas outlet (34) for discharging the process gas from the process chamber, wherein the gas inlet and the gas outlet are provided in a lower altitude region (h₁) of the process chamber,
and the device (1) comprises a flow providing device for providing a flow of a process gas in the process chamber (3) in the lower altitude region (h₁),
wherein the flow providing device comprises a gas supply device for generating at least one gas flow (30, 35, 36) in the process chamber (3) and, during operation of the flow providing device, the process gas flows in a main flow (30) from the gas inlet to the gas outlet,
and wherein during operation of the flow providing device a secondary flow (37) is located in a sub-region of the lower altitude region, which sub-region is located above a bottom surface of the process chamber (3) surrounding the build area (8),
wherein a boundary zone is provided at least in a section between the secondary flow (37) and the main flow (30) at least during the selective solidification of at least one layer of the building material and substantially in that sub-region of the lower altitude region that is located above the bottom surface surrounding the build area (8), wherein for this purpose the flow providing device comprises at least one of the following means:
- means for positioning at least one guide element (101a, 101b, 102a, 102b, 103a, 103b, 204, 205, 306, 307) as boundary zone in the process chamber, wherein the at least one guide element comprises at least one guide face (111, 112, 113, 113', 212, 212', 312, 312') for guiding the main flow (30) and/or the secondary flow (37) at least in a section;
- means for modifying the flow properties of the secondary flow (37) in a controlled manner and at least in a section thereof, in particular in its direction and/or velocity and/or its volumetric flow rate, by introducing at least one guide gas flow (35, 36) into the process chamber (3), wherein at least a section of the at least one guide gas flow (35, 36) flows through the sub-region of the lower altitude region that is located above the bottom surface surrounding the build area (8) and the guide gas flow is configured such that it flanks the main flow and interacts with the secondary flow, and/or
- providing a secondary gas outlet in the process chamber (3) in the sub-region of the lower altitude region that is located above a bottom surface of the process chamber surrounding the build area (8), wherein the secondary flow (37) is at least partially discharged from the process chamber through the secondary gas outlet.

## Revendications

1. Procédé pour affluer une chambre de traitement (3) d'un dispositif (1) de fabrication d'un objet tridimensionnel (2) par application couche par couche et solidification sélective d'un matériau de construction dans une zone de construction (8), dans lequel, pendant le procédé, la chambre de traitement (3) est affluée avec un gaz de traitement dans une zone de hauteur inférieure (h₁) de la chambre de traitement (3),
dans lequel la chambre de traitement (3) comprend une entrée de gaz (32, 132, 232) pour l'admission du gaz de traitement dans la chambre de traitement (3) et une sortie de gaz (34) pour l'évacuation du gaz de traitement hors de la chambre de traitement (3), dans lequel l'entrée de gaz (32) et la sortie de gaz (34) sont disposées dans la région de hauteur inférieure (h₁) de la chambre de traitement (3) et le gaz de traitement s'écoule dans un écoulement principal (30) de l'entrée de gaz (32) à la sortie de gaz (34),
et dans lequel un écoulement secondaire (37) est localisé dans une zone partielle de la zone de hauteur inférieure située au-dessus d'une surface de fond de la chambre de traitement (3) entourant la zone de construction (8),
dans lequel, pendant le procédé, une zone limite est positionnée au moins par sections entre l'écoulement secondaire (37) et l'écoulement principal (30) au moins pendant la solidification sélective d'au moins une couche du matériau de construction essentiellement dans la zone partielle de la zone de hauteur inférieure située au-dessus de la surface de fond entourant le champ de construction (8), en raison d'au moins une des mesures d'influence suivantes :
mesure d'influence I :
positionnement d'au moins un élément de guidage (101a, 101b, 102a, 102b, 103a, 103b, 204, 205, 306, 307) en tant que zone limite dans la chambre de traitement (3), ledit au moins un élément de guidage présentant au moins une surface de guidage (111, 112, 113, 113', 212, 212', 312, 312') pour guider au moins par sections l'écoulement principal (30) et/ou l'écoulement secondaire (37) ;
mesure d'influence II :
modification commandée, au moins par sections, des propriétés d'écoulement de l'écoulement secondaire (37), en particulier de sa direction et/ou de sa vitesse et/ou de son débit volumique, par introduction d'au moins un flux de gaz de guidage (35, 36) dans la chambre de traitement (3), le au moins un flux de gaz de guidage (35, 36) traversant au moins par sections la zone partielle de la zone de hauteur inférieure située au-dessus de la surface de fond entourant la zone de construction (8), et le flux de gaz de guidage étant configuré de telle sorte qu'il flanque l'écoulement principal et interagit alors avec l'écoulement secondaire, et/ou
modification commandée, au moins par sections, des propriétés d'écoulement de l'écoulement secondaire (37), en particulier de sa direction et/ou de sa vitesse et/ou de son débit volumique, une sortie de gaz secondaire étant en outre disposée dans la chambre de traitement (3) dans la zone partielle de la zone de hauteur inférieure située au-dessus d'une surface de fond de la chambre de traitement entourant la zone de construction (8), et l'écoulement secondaire (37) étant au moins partiellement évacué de la chambre de traitement par la sortie de gaz secondaire.

2. Procédé selon la revendication 1, dans lequel une extension horizontale maximale de l'entrée de gaz (32, 132, 232) et/ou de la sortie de gaz (34) correspond à au moins 80%, de préférence à au moins 100%, de manière particulièrement préférée à au moins 120% d'une extension de la zone de construction (8), en particulier à une longueur (M) d'un côté de la zone de construction adjacent d'une zone de construction rectangulaire (8) et/ou à une diagonale la plus longue de la zone de construction d'une zone de construction polygonale et/ou à un diamètre de la zone de construction d'une zone de construction circulaire.

3. Procédé selon la revendication 1 ou 2 en utilisant la mesure d'influence I,
dans lequel ledit au moins un élément de guidage (101a, 101b, 102a, 102b, 103a, 103b, 204, 205) comprend une première extrémité (115, 215) positionnée au niveau de l'entrée de gaz (32, 132, 232) au moins pendant la solidification sélective d'au moins une couche du matériau de construction, dans lequel la première extrémité (115, 215) de l'élément de guidage de préférence est positionnée sans espace au niveau de l'entrée de gaz.

4. Procédé selon la revendication 3, dans lequel la première extrémité (115, 215) présente une dimension verticale qui est supérieure ou égale à une extension verticale (h₁) de l'ouverture de l'entrée de gaz et/ou
dans lequel l'élément de guidage (101a, 101b, 102a, 102b, 103a, 103b, 204, 205) est positionné de telle sorte que, dans une projection orthogonale de l'entrée de gaz et de l'élément de guidage sur le plan de la zone de construction (8), l'ouverture de l'entrée de gaz est disposée à une première distance (d₁) de la zone de construction (8) et une deuxième extrémité de l'élément de guidage est disposée à une deuxième distance (d₂) de la zone de construction, la deuxième distance (d₂) étant inférieure à la première distance (d₁),
dans lequel la deuxième distance (d₂) est de préférence inférieure à la première distance (d₁) d'au moins 1 cm, de manière plus préférée d'au moins 5 cm, de manière particulièrement préférée d'au moins 10 cm.

5. Procédé selon la revendication 3 ou 4, dans lequel l'élément de guidage (101a, 101b, 205) est positionné de telle sorte que, dans une projection orthogonale de l'entrée de gaz sur le plan de la zone de construction (8), la surface de guidage dudit au moins un élément de guidage est orientée essentiellement perpendiculairement à un plan de l'ouverture d'entrée de gaz ou
dans lequel l'élément de guidage (102a, 102b, 103a, 103b, 204) est positionné de telle sorte que, dans une projection orthogonale de l'entrée de gaz sur le plan de la zone de construction (8), la surface de guidage dudit au moins un élément de guidage est dirigée vers un plan de l'ouverture d'entrée de gaz selon un angle (α) supérieur à 0° par rapport à une perpendiculaire (S),
dans lequel, la surface de guidage et la direction d'extension des canaux d'admission de préférence forment un angle (α) d'au moins 3°, de manière plus préférée d'au moins 5°, de manière encore plus préférée d'au moins 10° et/ou de 15° au maximum, de manière plus préférée de 20° au maximum, de manière particulièrement préférée de 15° au maximum.

6. Procédé selon l'une quelconque des revendications 3 à 5, dans lequel au moins deux éléments de guidage (101a, 101b, 102a, 102b, 103a, 103b, 204, 205) sont positionnés dans la chambre de traitement (3) et dans lequel un premier desdits éléments de guidage est positionné à une première extrémité de l'entrée de gaz et un deuxième desdits éléments de guidage est positionné à une deuxième extrémité de l'entrée de gaz.

7. Procédé selon l'une quelconque des revendications 1 à 6 en utilisant la mesure d'influence I,
dans lequel ledit au moins un élément de guidage (306, 307) est positionné à distance de l'entrée de gaz (32, 132, 232) dans la chambre de traitement (3).

8. Procédé selon la revendication 7, dans lequel ledit au moins un élément de guidage (306, 307) est positionné de telle sorte que, dans une projection orthogonale de l'entrée de gaz sur le plan de la zone de construction (8), la surface de guidage (311, 311', 312, 312') de l'élément de guidage (306, 307) est essentiellement perpendiculaire à un plan de l'ouverture d'entrée de gaz, ou est orientée selon un angle de 30° au maximum, de préférence de 20° au maximum, de manière plus préférée de 10° au maximum, de manière particulièrement préférée de 5° au maximum par rapport à une perpendiculaire (S) à un plan de l'ouverture d'entrée de gaz, et/ou
dans lequel au moins deux éléments de guidage (306, 307) sont positionnés dans la chambre de traitement (3) de telle sorte que, dans une projection orthogonale des éléments de guidage sur le plan de la zone de construction (8), les éléments de guidage flanquent les côtés disposés parallèlement les uns aux autres d'une zone de construction (8) essentiellement rectangulaire.

9. Procédé selon l'une des revendications 3 à 8, dans lequel l'au moins un élément de guidage (101a, 101b, 102a, 102b, 103a, 103b, 204, 205) est configuré et/ou positionné dans la chambre de traitement (3) de telle sorte qu'il est disposé de manière déplaçable dans la chambre de traitement (3), notamment qu'il est disposé de manière mobile et/ou pivotante dans la chambre de traitement.

10. Procédé selon l'une des revendications 1 à 9 en utilisant la mesure d'influence II,
dans lequel le flux de gaz de guidage (35, 36) présente, au moins par sections, en particulier immédiatement après une entrée dans la chambre de traitement (3), une vitesse maximale supérieure d'au moins 20% et/ou un débit volumique supérieur d'au moins 20% par élément de volume traversé comparé à celui de l'écoulement principal (30) et/ou
dans lequel le flux de gaz de guidage (35, 36) est introduit selon un angle (α) supérieur à 0° s'éloignant de la direction de l'écoulement principal (30) de manière plus préférée selon un angle d'au moins 1°, de manière encore plus préférée d'au moins 3°, de manière encore plus préférée d'au moins 5° et/ou de 30° au maximum, de manière encore plus préférée de 20° au maximum, de manière encore plus préférée 15° au maximum.

11. Procédé selon l'une quelconque des revendications 1 à 10, dans lequel une zone limite est positionnée, au moins par sections, entre l'écoulement secondaire (37) et l'écoulement principal (30), au moins pendant la solidification sélective d'au moins une couche du matériau de construction, essentiellement dans la zone partielle de la zone de hauteur inférieure située au-dessus de la surface de fond entourant la zone de construction (8), en raison d'une mesure d'influence III :
déplacement contrôlé, au moins par tronçons, de l'écoulement secondaire (37), en introduisant dans la chambre de traitement un autre écoulement de gaz dans la zone partielle de la zone de hauteur inférieure située au-dessus de la surface de fond entourant la zone de construction.

12. Procédé selon la revendication 11, dans lequel l'autre flux de gaz est dirigé à l'opposé de l'écoulement secondaire (37) au moins par sections et/ou est incident en oblique sur l'écoulement secondaire (37) et/ou présente une vitesse d'écoulement plus grande et/ou un débit volumique plus grand que l' écoulement secondaire.

13. Procédé de fabrication d'un objet tridimensionnel (2) dans un dispositif (1) de fabrication d'un objet tridimensionnel (2) par application couche par couche et solidification sélective d'un matériau de construction dans une zone de construction (8), dans lequel un procédé selon l'une des revendications 1 à 12 est mis en oeuvre au moins pendant la solidification sélective d'au moins une couche du matériau de construction.

14. Dispositif de fabrication d'un objet tridimensionnel (2) par application couche par couche et solidification sélective d'un matériau de construction dans une zone de construction (8) dans une chambre de traitement (3),
dans lequel la chambre de traitement comprend une entrée de gaz (32, 132, 232) pour l'admission d'un gaz de traitement dans la chambre de traitement (3) et une sortie de gaz (34) pour l'évacuation du gaz de traitement hors de la chambre de traitement, l'entrée de gaz et la sortie de gaz étant disposées dans une zone de hauteur inférieure (h₁) de la chambre de traitement,
et le dispositif (1) comprend un dispositif d'afflux pour affluer la chambre de traitement (3) avec un gaz de traitement dans la zone de hauteur inférieure (h₁),
dans lequel le dispositif d'afflux comprend un dispositif de transport de gaz pour générer au moins un flux de gaz (30, 35, 36) dans la chambre de traitement (3), et le gaz de traitement s'écoule dans un écoulement principal (30) de l'entrée de gaz à la sortie de gaz lors du fonctionnement du dispositif d'écoulement,
et dans lequel, lors du fonctionnement du dispositif d'écoulement, un écoulement secondaire (37) est localisé dans une zone partielle de la zone de hauteur inférieure située au-dessus d'une surface de fond de la chambre de traitement (3) entourant la zone de construction (8),
dans lequel une zone limite est disposée au moins par sections entre l'écoulement secondaire (37) et l'écoulement principal (30) au moins pendant la solidification sélective d'au moins une couche du matériau de construction essentiellement dans la zone partielle de la zone de hauteur inférieure située au-dessus de la surface de fond entourant la zone de construction (8), le dispositif d'écoulement comprenant à cet effet au moins un des moyens suivants :
- des moyens pour un positionnement d'au moins un élément de guidage (101a, 101b, 102a, 102b, 103a, 103b, 204, 205, 306, 307) en tant que zone limite dans la chambre de traitement, ledit au moins un élément de guidage présentant au moins une surface de guidage (111, 112, 113, 113', 212, 212', 312, 312') pour guider au moins par sections l'écoulement principal (30) et/ou l'écoulement secondaire (37) ;
- des moyens pour une modification commandée au moins par sections des propriétés d'écoulement de l'écoulement secondaire (37), en particulier de sa direction et/ou de sa vitesse et/ou de son débit volumique, par introduction d'au moins un flux de gaz de guidage (35, 36) dans la chambre de traitement (3), le au moins un flux de gaz de guidage (35, 36) traversant au moins par sections la zone partielle de la zone de hauteur inférieure située au-dessus de la surface de fond entourant la zone de construction (8), et le flux de gaz de guidage étant configuré de telle sorte qu'il flanque l'écoulement principal et interagit alors avec l'écoulement secondaire, et/ou
- mise à disposition d'une sortie de gaz secondaire dans la chambre de traitement (3) dans la zone partielle de la zone de hauteur inférieure située au-dessus d'une surface de fond de la chambre de traitement entourant la zone de construction (8), l'écoulement secondaire (37) étant au moins partiellement évacué de la chambre de traitement par la sortie de gaz secondaire.
